(19) Europäisches Patentamt
European Patent Office
Office européen des brevets

(11) Veröffentlichungsnummer : **0 093 855**
**B1**

# (12) EUROPÄISCHE PATENTSCHRIFT

(45) Veröffentlichungstag der Patentschrift : **22.01.86**

(51) Int. Cl.⁴ : **C 08 F 20/18**, C 08 F 20/30, C 08 L 27/06

(21) Anmeldenummer : **83102408.8**

(22) Anmeldetag : **11.03.83**

(54) **Polymere Phenylalkyl-acrylsäureester, deren Herstellung und deren Verwendung.**

(30) Priorität : **06.05.82 DE 3216988**

(43) Veröffentlichungstag der Anmeldung : **16.11.83 Patentblatt 83/46**

(45) Bekanntmachung des Hinweises auf die Patenterteilung : **22.01.86 Patentblatt 86/04**

(84) Benannte Vertragsstaaten : **BE DE FR GB IT NL SE**

(56) Entgegenhaltungen :
**FR-A- 1 511 011**
**FR-A- 2 100 047**
**GB-A- 2 089 523**
**US-A- 3 751 449**
**Die Akte enthält technische Angaben, die nach dem Eingang der Anmeldung eingereicht wurden und die nicht in dieser Patentschrift enthalten sind.**

(73) Patentinhaber : **HÜLS AKTIENGESELLSCHAFT**
**Patentabteilung / PB 15 - Postfach 13 20**
**D-4370 Marl 1 (DE)**

(72) Erfinder : **Stützel, Bernhard, Dr.**
**Stargarder Strasse 32**
**D-4370 Marl (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue St-Denis, 75001 Paris, France

**Beschreibung**

Polymere Phenylalkyl-acrylsäureester mit langer aliphatischer Kette im Alkoholteil sind bereits bekannt (US-PS 3 751 449). Es handelt sich dabei beispielsweise um Polymere des 5-Phenyl-n-pentylacrylats oder Polymere des 6-Phenyl-n-hexyl-acrylats bzw. um Polymere von höheren Homologen dieser Monomeren. Diese Polymeren finden ihre Verwendung als druckempfindliche Klebstoffe (vgl. US-PS 3 751 449, Spalte 1, Zeilen 14 bis 39).

Bislang nicht beschrieben und somit neu sind Polymere von Phenylalkyl-acrylsäureestern der Formel

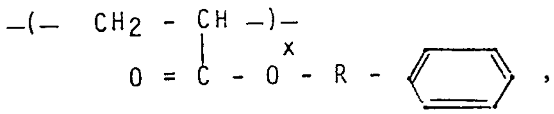

in der R einen geradkettigen oder verzweigten Alkylenrest mit 3 bis 4 Kohlenstoffatomen bedeutet, der gegebenenfalls durch ein Ethersauerstoffatom unterbrochen ist, wobei der geradkettige Anteil wenigstens 3 Kohlenstoffatome enthält, und x für eine Zahl von 20 bis $5 \cdot 10^5$ steht. Vorzugsweise steht x für eine Zahl von 50 bis 50 000.

Bei diesen neuen polymeren Verbindungen handelt es sich beispielsweise um :

Poly-3-Phenyl-n-propyl-acrylat :

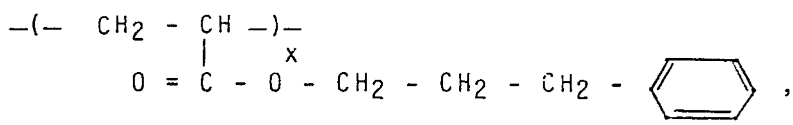

Poly-4-Phenyl-n-butyl-acrylat :

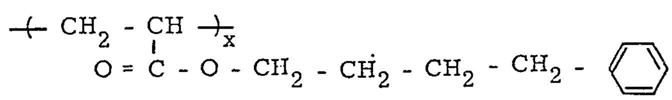

Poly-(3-Phenyl-1-methyl)-propyl-acrylat :

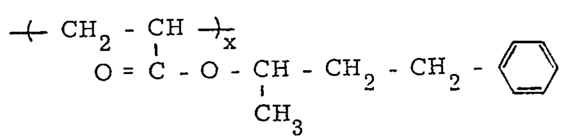

Poly-(3-Phenyl-2-methyl)-propyl-acrylat :

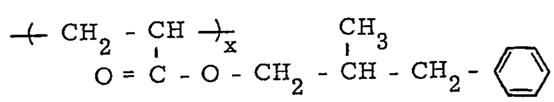

Poly-(3-Phenyl-3-methyl)-propyl-acrylat :

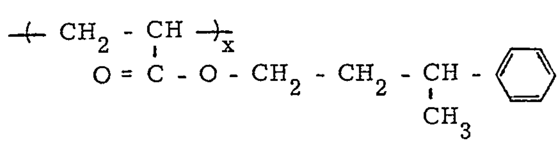

Poly-Phenylethyl-oxethyl-acrylat :

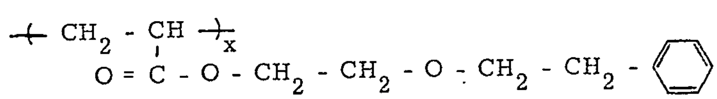

Herstellbar sind die erfindungsgemäßen Polymeren durch übliche Polymerisation in Masse, in

Lösung, in Emulsion oder in Suspension in der Weise, wie dies z. B. in der Monographie Monomeric Acrylic Esters von Riddle, Reinhold Publishing Corp. (1954) auf den Seiten 37 bis 56 oder auch in der Monographie Acrylic Resins von Horn, Reinhold Publishing Corp. (1960), Seiten 26 bis 29, beschrieben ist. Die Molekulargewichte lassen sich hierbei in bekannter Weise durch Variation von Polymerisationstemperatur, Initiatorkonzentration und Reglerzusätze verändern. Das zahlenmittlere Molekulargewicht bewegt sich von $5 \cdot 10^3$ bis $5 \cdot 10^5$ und das gewichtsmittlere Molekulargewicht von $10^4$ bis $5 \cdot 10^8$, vorzugsweise von $5 \cdot 10^4$ bis $5 \cdot 10^7$.

Zu polymerisierende Monomere sind phenylsubstituierte Acrylsäureester der Formel

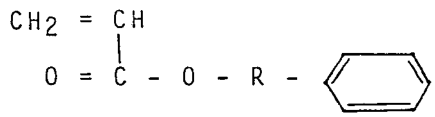
,

in der R einen geradkettigen oder verzweigten Alkylenrest mit 3 bis 4 Kohlenstoffatomen bedeutet, der gegebenenfalls durch eine Ethersauerstoffbrücke unterbrochen ist, wobei der geradkettige Anteil wenigstens 3 Kohlenstoffatome enthält.

Bei diesen Verbindungen handelt es sich beispielsweise um folgende Individuen :

3-Phenyl-n-propyl-acrylat :

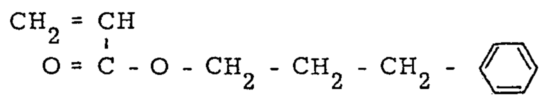

4-Phenyl-n-butyl-acrylat :

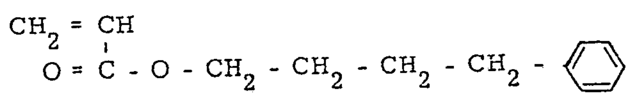

(3-Phenyl-1-methyl)-propyl-acrylat :

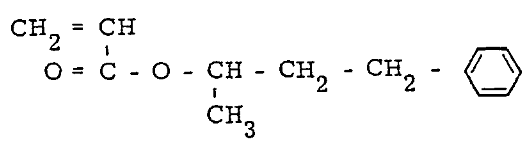

(3-Phenyl-2-methyl)-propyl-acrylat :

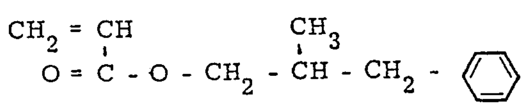

(3-Phenyl-3-methyl)-propyl-acrylat :

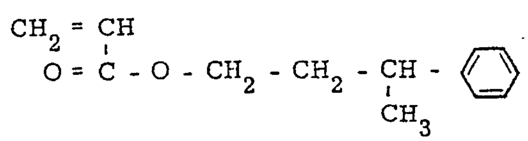

2-Phenylethyl-oxyethyl-acrylat :

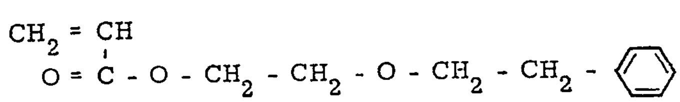

Benzyl-oxyisopropyl-acrylat :

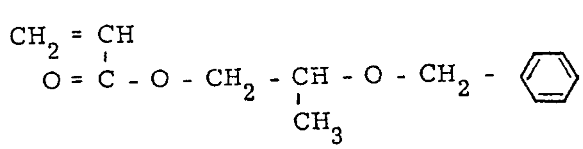

3-Phenylpropyl-oxymethyl-acrylat :

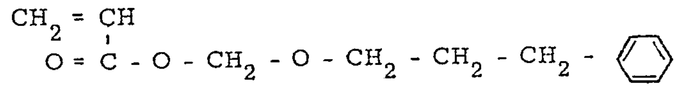

Benzyl-oxypropyl-acrylat :

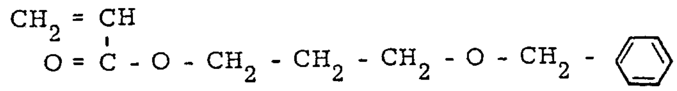

Herstellbar sind die Acrylsäureester unter anderem durch direkte Veresterung der einschlägigen Alkohole mit Acrylsäure.

Zugrundeliegende Alkohole können z. B. nach folgenden bereits beschriebenen Methoden hergestellt werden :

1. Das 3-Phenylpropanol-1 kann aus Styrol durch Anlagerung von 2 Mol Formaldehyd und anschließender Hydrierung hergestellt werden (Organic Syntheses, Vol. IV, Seiten 786/787 und Seiten 798/799).

2. Das 4-Phenylbutanol-1 kann aus ß-Phenethylmagnesiumbromid und Ethylenoxid hergestellt werden (J. Am. Chem. Soc. *46,* 242).

3. Das 1-Methyl-3-phenyl-propanol-1 kann man aus Methyl-(phenylethyl)-keton durch Reduktion erhalten (Collect. Czech. Chem. Commun. 1976, *41* (8), 2264).

4. 3-Phenyl-3-methyl-propanol-1 kann nach vorangegangener Transmetallierung durch Umsetzung der a-Natriumverbindung des Ethylbenzols mit Ethylenoxid erhalten werden (Japan. Kokai 73 75 551, 14 01 1972).

5. Das 2-Methyl-3-phenylpropanol-1 kann durch Alanat-Reduktion des Natriumsalzes von Benzylmalonsäurediethylester erhalten werden (Chem. Ber. 1970, *103,* 3771).

6. Ethylenglykolmonophenethylether erhält man aus 2-phenylethanol und Ethylenoxid unter Säurekatalyse (Bull. soc. chem. 8 (1941), 170-85).

Bei der Herstellung der Polymerisate in wäßriger Emulsion lassen sich als Emulgatoren die bekannten ionogenen und nichtionogenen Typen einsetzen. Es kommen insbesondere ionogene infrage, z. B. Salze von Carbonsäure, wie Natriumcaprinat, Natriumlaurat, Natriummyristat, Natriumpalmitat. Weiterhin eignen sich Salze primärer und sekundärer Alkylsulfate, z. B. Natriumcaprylsulfat, Natriumlaurylsulfat, Natriummyristylsulfat und Natriumoleylsulfat. Ebenso kommen infrage Sulfate veresterter Polyoxyverbindungen, wie monofettsaurer Glycerinschwefelsäureester, Salze primärer und sekundärer Alkylsulfonate, wie Natriumethylsulfonat, Natriumstearylsulfonat, Natriumoleylsulfonat, n-Alkansulfonate mit statistischer Verteilung der Sulfonsäuregruppe und Kettenlänge $C_{13}$-$C_{17}$ usw. Es können auch Alkylarylsulfonate eingesetzt werden, z. B. das Na-Salz der p-n-Dodecylbenzolsulfonsäure.

Weiterhin kommen auch Gemische von Emulgatoren in Betracht. Zu den genannten Emulgatoren können auch zusätzlich Hilfsstoffe beigegeben werden, z. B. Alkohole, wie Laurylalkohol, Ester, wie Sorbitmonolaurat und Carbonsäureglykolester.

Die Konzentration der Emulgatoren sollte 0,1 bis 3 Gewichtsprozent, vorzugsweise 0,5 bis 2,0 Gewichtsprozent, bezogen auf Monomere, betragen.

Als Katalysatoren kommen die bei der Emulsionspolymerisation üblicherweise angewandten wasserlöslichen Verbindungen infrage, wie wasserlösliches Persulfat, z. B. Na-, oder K-Persulfat gegebenenfalls kombiniert mit einer reduzierenden Komponente, wie wasserlösliches Bisulfit, Hydrosulfit, Hydrazin, Thiosulfat, Formaldehydsulfoxylate ; Wasserstoffperoxid kombiniert mit reduzierenden Komponenten, wie Bisulfit, Hydrazin, Hydroxylamin oder Ascorbinsäure, ferner wasserlösliches Persulfat kombiniert mit Wasserstoffperoxid und einer aktivierenden Komponente, wie Kupfersalze, welche im alkalischen Medium mit Komplexbildnern, wie Pyrophosphaten, einzusetzen sind. Es werden die üblichen Konzentrationen angewendet.

Die Polymerisationstemperatur sollte 5 bis 120 °C betragen, vorzugsweise jedoch 40 bis 90 °C. Die Polymeren haben in der Regel eine breite Molekulargewichtsverteilung, wie dies anhand der Beispiele später erläutert wird. In den Molekulargewichtsmittelwerten, ermittelt durch Gelpermeationschromatografie (GPC), zeigen sich diese breiten Molekulargewichtsverteilungen, indem zahlenmittlere Molekulargewichte von $5 \cdot 10^3$ bis $5 \cdot 10^4$ und gewichtsmittlere Molekulargewichte von $5 \cdot 10^5$ bis $5 \cdot 10^8$ möglich sind. Als Endgruppen treten in bekannter Weise eingebaute Katalysatorreste auf. Die Polymeren sind ataktisch.

Bei der Lösungspolymerisation können z. B. folgende Lösungsmittel eingesetzt werden : aromatische Kohlenwasserstoffe, wie Toluol, Xylol o. ä., Ether, wie Tetrahydrofuran, Diethylether o. ä.

Als Katalysatoren kommen z. B. infrage : organische Peroxide, wie Benzoylperoxid, Succinylperoxid, Lauroylperoxid o. ä., Percarbonate, wie Isopropylpercarbonat, Cyclohexylpercarbonat ; Peroxydicarbonate, wie Dicetylperoxydicarbonat ; Azoverbindungen, wie Azodiisobutyronitril etc.

Die Polymerisationstemperatur sollte zwischen 20 und 120 °C liegen.

Bei der Massepolymerisation können z. B. folgende Katalysatoren angewendet werden : organische Peroxide, wie Benzoylperoxid, Succinylperoxid, Lauroylperoxid ; Percarbonate, wie Isopropylpercarbonat, Cyclohexylpercarbonat ; Peroxydicarbonate, wie Dicetylperoxydicarbonat ; Azoverbindungen, wie Azodiisobutyronitril etc.

Die Polymerisationstemperatur sollte 20 bis 180 °C betragen.

In der Suspensionspolymerisation können als Suspensionsstabilisatoren eingesetzt werden : handelsübliche Hydroxypropylcellulosen, Hydroxyethylcellulosen, teilverseifte Polyvinylacetate, Polyvinylpyrrolidon, Methylcellulosen, Gelatine oder Mischungen dieser Stabilisatoren.

Als Katalysatoren kommen z. B. infrage : organische Peroxide, wie Benzoylperoxid, Succinylperoxid, Lauroylperoxid ; Percarbonate, wie Isopropylpercarbonat, Cyclohexylpercarbonat ; Peroxydicarbonate, wie Dicetylperoxydicarbonat ; Azoverbindungen, wie Azodiisobutyronitril etc.

Die Polymerisationstemperatur sollte 20 bis 120 °C betragen.

Es ist auch möglich, die Polymerisationen der Phenylalkyl-acrylsäureester in Gegenwart vernetzend wirkender Verbindungen durchzuführen. Ebenso besteht die Möglichkeit, die Polymerisate der phenylsubstituierten Acrylsäureester mit vernetzend wirkenden Verbindungen umzusetzen. Als vernetzend wirkende Verbindungen kommen infrage : Divinylbenzol, Divinylester von zwei- und dreibasischen Säuren, wie Divinyladipat, Diallylester von mehrfunktionellen Säuren (Diallylphthalate), Divinylether von mehrwertigen Alkoholen (Divinylether von Ethylenglykol), di- und tri-Methacrylate und -acrylate mehrwertiger Alkohole. Besonders geeignet sind die handelsüblichen Vertreter der letztgenannten Gruppe, da sie sich Acrylsäureestern gut mischpolymerisieren lassen und dem fertigen Gemisch eine bessere thermische Stabilität verleihen. Beispielsweise seien erwähnt : Ethylenglykoldimethacrylat, Propylenglykoldimethacrylat, 1,3-Butylenglykoldimethacrylat, 1,4-Butylenglykoldimethacrylat sowie die entsprechenden Diacrylate.

Die Vernetzungsreaktion kann in üblicher Weise bei Temperaturen von 20 bis 180 °C mit Mengen von 0,1 bis 5 Gewichtsprozent an Vernetzer, bezogen auf Polymerisat, durchgeführt werden.

Die so erhaltenen Polymerisate lassen sich als schlagfest machende Komponente in Mengen von 1 bis 30, vorzugsweise von 3 bis 15, Gewichtsprozent dem an sich starren Polyvinylchlorid zusetzen und ergeben in völlig überraschender Weise Formmassen mit besonders hoher Schlagzähigkeit und Transparenz.

Es waren zwar bereits transparente schlagzähe Polyvinylchlorid-Formmassen bekannt, deren modifizierende Komponente auch einen Acrylatanteil besitzt, jedoch handelt es sich dabei durchweg um vergleichsweise kompliziert aufgebaute Mischungen von Mischpolymeren und Pfropfpolymeren, wie dies beispielsweise in der DE-PS 26 21 522 und in der DE-AS 20 13 020 der Fall ist. Es war daher nicht zu erwarten, daß der Zusatz eines einzigen Homopolymeren zu Polyvinylchlorid hochschlagfeste hochtransparente Formmassen ergeben würde, deren Schlagfestigkeit und Transparenz sogar diejenige von so kompliziert aufgebauten Formmassen, wie sie gemäß DE-AS 20 13 020 herstellbar sind, noch übertrifft (vgl. Tabelle 1).

Als Polyvinylchlorid kann jedes beliebig hergestellte Polyvinylchlorid eingesetzt werden, wie es beispielsweise herstellbar ist gemäß der Monographie Kainer, Polyvinylchlorid und Vinylchlorid-Mischpolymerisate, Springer-Verlag, (1965) Berlin/Heidelberg/New York, Seiten 1 bis 59.

Das Einbringen der erfindungsgemäßen Polymerisate in das Polyvinylchlorid kann durch alle bekannten Verfahren des Modifizierens durchgeführt werden, z. B. durch Pfropfpolymerisation von Vinylchlorid auf das erfindungsgemäße Polymere oder durch beliebige Arten des Mischens von Polyvinylchlorid mit dem erfindungsgemäßen Polyacrylat, z. B. durch Mischen im festen Zustand auf einem Walzenmischer, einem Baubury-Mischer, einem Plastographen, einem Compoundier-Extruder oder dergleichen. Das Polyvinylchlorid und das erfindungsgemäße Polyacrylat können auch in Latexform miteinander vermischt und anschließend in üblicher Weise getrocknet werden, z. B. durch Sprühtrocknung.

Die Erfindung wird durch die folgenden Beispiele erläutert.

A) Herstellung des phenylsubstituierten Acrylsäureesters

Beispiel 1

In einem 4 l-Dreihalskolben mit Rührer, Rückflußkühler, Wasserauskreiser, Tropftrichter und Heizeinrichtung werden vorgelegt :

43 Teile (2 150 g) 3-Phenylpropanol-1
10 Teile (500 g) Toluol
0,4 Teile (20 g)Toluolsulfonsäure
0,02 Teile (1 g) Hydrochinon

Im Tropftrichter befinden sich 17,3 Teile (865 g) Acrylsäure.

Aus dem Tropftrichter werden unter Rührung 0,5 Teile (25 g) Acrylsäure in das vorgelegte Reaktionsgemisch gegeben und der Kolbeninhalt auf 150 bis 170 °C aufgeheizt. Wenn sich am

Wasserabscheider das erste Wasser absetzt, wird die restliche Acrylsäure innerhalb von ca. 3 Stunden zugetropft und portionsweise das jeweils ausgeschiedene Wasser abgezogen, bis mindestens 95 % der theoretisch zu erwartenden Wassermenge erreicht sind.

Zur Aufarbeitung wird das erkaltete Produkt mit $NaHCO_3$-Lösung und Wasser gewaschen, die wäßrige Phase im Scheidetrichter abgetrennt und die organische Phase destilliert. Nach Abdestillation von Toluol bei ca. 100 mbar werden Acrylsäureester und Alkohol über eine Kolonne getrennt.

Siedepunkt des 3-Phenylpropanol-1 : 109 °C/6 mbar
Siedepunkt des 3-Phenylpropanol-1-Acrylsäureesters : 120 °C/6 mbar

## Beispiel 2

In der unter Beispiel 1 beschriebenen Weise werden vorgelegt :

47 Teile (2 350 g) 4-Phenylbutanol-1
10 Teile (500 g) Toluol
0,4 Teile (20 g) Toluolsulfonsäure
0,02 Teile (1 g) Hydrochinon
Im Tropftrichter befinden sich 17,3 Teile (865 g) Acrylsäure.

Reaktionsführung und Aufarbeitung geschehen in der unter Beispiel 1 beschriebenen Weise.
Siedepunkt des 4-Phenylbutanol-1 : 116 °C/6 mbar
Siedepunkt des 4-Phenylbutanol-1-Acrylsäureesters : 126 °C/6 mbar

## Beispiel 3

In der unter Beispiel 1 beschriebenen Weise werden vorgelegt :

47 Teile (2 350 g) 3-Phenyl-3-methyl-propanol-1
10 Teile (500 g) Toluol
0,4 Teile (20 g) Toluolsulfonsäure
0,02 Teile (1 g) Hydrochinon
Im Tropftrichter befinden sich 17,3 Teile (865 g) Acrylsäure.
Reaktionsführung und Aufarbeitung geschehen in der unter Beispiel 1 beschriebenen Weise.
Siedepunkt des 3-Phenyl-3-methyl-propanol-1 : 114 °C/6 mbar
Siedepunkt des 3-Phenyl-3-methyl-propanol-1-Acrylsäureesters : 123 °C/6 mbar

## Beispiel 4

In der unter Beispiel 1 beschriebenen Weise werden vorgelegt :

47 Teile (2 350 g) 3-Phenyl-2-methyl-propanol-1
10 Teile (500 g) Toluol
0,4 Teile (20 g) Toluolsulfonsäure
0,02 Teile (1 g) Hydrochinon
Im Tropftrichter befinden sich 17,3 Teile (865 g) Acrylsäure.

Reaktionsführung und Aufarbeitung geschehen in der unter Beispiel 1 beschriebenen Weise.
Siedepunkt des 3-Phenyl-2-methyl-propanols : 114 °C/6 mbar
Siedepunkt des 3-Phenyl-2-methyl-propanol-acrylsäureesters : 123 °C/6 mbar

## Beispiel 5

In der unter Beispiel 1 beschriebenen Weise werden vorgelegt :

47 Teile (2 350 g) 3-Phenyl-1-methyl-propanol-1
10 Teile (500 g) Toluol
0,4 Teile (20 g) Toluolsulfonsäure
0,02 Teile (1 g) Hydrochinon

Im Tropftrichter befinden sich 17,3 Teile (865 g) Acrylsäure.
Reaktionsführung und Aufarbeitung geschehen in der unter Beispiel 1 beschriebenen Weise

Siedepunkt des 3-Phenyl-1-methyl-propanol-1 : 114 °C/6 mbar
Siedepunkt des 3-Phenyl-1-methyl-propanol-1-acrylsäureesters : 123 °C/6 mbar

Beispiel 6

In der unter Beispiel 1 beschriebenen Weise werden vorgelegt :

50 Teile (2 500 g) Ethylenglykolmonophenethylether
10 Teile (500 g) Toluol
0,4 Teile (20 g) Toluolsulfonsäure
0,02 Teile (1 g) Hydrochinon
Im Tropftrichter befinden sich 17,3 Teile (865 g) Acrylsäure.

Reaktionsführung und Aufarbeitung geschehen in der unter Beispiel 1 beschriebenen Weise.
Siedepunkt des Ethylenglykolmonophenethylethers : 122 °C/6 mbar
Siedepunkt des Ethylenglykolmonophenethylether-acrylsäureesters : 132 °C/6 mbar

B) Herstellung des Poly-Acrylsäureesters

Beispiel 7

In einem 2 l-Stahlautoklaven mit Rührer, Temperierung sowie üblichen Einrichtungen zum Evakuieren, Begasen mit $N_2$, Einfüllen und Zudosieren von Reaktanten (Hersteller z. B. Fa. SFS/Buechi, Uster, Schweiz) werden vorgelegt :

20 Teile (250 g) 3-Phenylpropanol-1-acrylsäureester
76 Teile (950 g) VE-Wasser
0,24 Teile (3 g) Na-Laurat

In die Vorlage der Dosiereinrichtung werden gegeben :

0,012 Teile (0,15 g) Ammoniumperoxodisulfat
4 Teile (50 g) VE-Wasser

Nach Entgasen und Spülen mit $N_2$ wird der Reaktorinhalt unter 2 bar $N_2$-Überdruck auf 80 °C aufgeheizt. Während des Aufheizens werden 5 ml der Ammoniumperoxodisulfat-Lösung zugegeben, der Rest wird gleichmäßig im Verlauf von 120 Minuten zudosiert und die Reaktionstemperatur auf 80 °C gehalten. Nach weiteren 30 Minuten ist die Reaktion beendet. Man läßt abkühlen und erhält einen weißen stabilen Polyacrylat-Latex.

Diese Polyacrylate haben eine sehr breite Molekulargewichtsverteilung. Zur eingehenden Charakterisierung dieser Verteilung wird die Gelpermeationschromatographie (GPC) herangezogen, wozu jeweils eine Lösung des Polymeren in Tetrahydrofuran diente. Auf diese Weise können die Molekulargewichtsverteilung und die in der Polymercharakterisierung üblichen Molekulargewichtsmittelwerte — das Zahlenmittel $M_n = \Sigma niMi/\Sigma ni$ und das Gewichtsmittels $M_w = \Sigma niMi^2/\Sigma niMi$ — angegeben werden :

$$M_n = 8,1 \cdot 10^3 \qquad M_w = 13,4 \cdot 10^7$$

Die Molekulargewichtsverteilungskurve ist in Figur 1 wiedergegeben.

Beispiel 7a

In der in Beispiel 7 verwendeten Apparatur wird in der dort beschriebenen Weise auch in Gegenwart von vernetzend wirkenden Substanzen polymerisiert. Hierzu werden vorgelegt :

20 Teile (250 g) 3-Phenylpropanol-1-acrylsäureester
76 Teile (950 g) VE-Wasser
0,2 Teile (2,5 g) Diallylphthalat
0,24 Teile (3,0 g) Na-Laurat

In die Vorlage der Dosiereinrichtung werden gegeben :

0,012 Teile (0,15 g) Ammoniumperoxodisulfat
4 Teile (50 g) VE-Wasser

Man erhält einen weißen stabilen Polyacrylat-Latex. Die Molekulargewichtscharakterisierung durch GPC (vgl. Anmerkung bei Beispiel 7) ergibt

$$M_n = 2,4 \cdot 10^4 \qquad M_w = 21 \cdot 10^7$$

Die Molekulargewichtsverteilung ist in Figur 2 wiedergegeben.

Beispiele 8 bis 12

In der in Beispiel 7 verwendeten Apparatur werden in der dort beschriebenen Weise die nach den Beispielen 2 bis 6 hergestellten Acrylsäureester polymerisiert. Hierzu verwendet man jeweils :

20 Teile (250 g) phenylsubstituierte Acrylsäureester
76 Teile (950 g) VE-Wasser
0,24 Teile (3 g) Na-Laurat

In die Vorlage der Dosiereinrichtung werden gegeben :

0,012 Teile (0,15 g) Ammoniumperoxodisulfat
4 Teile (50 g) VE-Wasser

Man erhält jeweils einen weißen, stabilen Polyacrylat-Latex.
Die Molekulargewichtscharakterisierung durch GPC (vgl. Anmerkung bei Beispiel 7) ergibt
bei Beispiel 8 $M_n = 9,3 \cdot 10^3$, $M_w = 14,4 \cdot 10^7$
Molekulargewichtsverteilungskurve siehe Figur 3 ;
bei Beispiel 9 $M_n = 8,5 \cdot 10^3$, $M_w = 13,5 \cdot 10^7$
Molekulargewichtsverteilungskurve siehe Figur 4 ;
bei Beispiel 10 $M_n = 8,4 \cdot 10^3$, $M_w = 12,3 \cdot 10^7$
Molekulargewichtsverteilungskurve siehe Figur 5 ;
bei Beispiel 11 $M_n = 8,2 \cdot 10^3$, $M_w = 11,5 \cdot 10^7$
Molekulargewichtsverteilungskurve siehe Figur 6 ;
bei Beispiel 12 $M_n = 7,6 \cdot 10^3$, $M_w = 12,1 \cdot 10^7$
Molekulargewichtsverteilungskurve siehe Figur 7.

Beispiele 8a bis 12a

Die in den Beispielen 8 bis 12 beschriebenen Polymerisationen der nach Beispiel 2 bis 6 hergestellten Acrylsäureester werden auch in Gegenwart von vernetzend wirkenden Substanzen durchgeführt. Hierzu verwendet man jeweils :

20 Teile (250 g) phenylsubstituierte Acrylsäureester
76 Teile (950 g) VE-Wasser
0,2 Teile (2,5 g) Diallylphthalat
0,24 Teile (3,0 g) Na-Laurat

In die Vorlage der Dosiereinrichtung werden gegeben :

0,012 Teile (0,15 g) Ammoniumperoxodisulfat
4 Teile (50 g) VE-Wasser

Man erhält jeweils einen weißen, stabilen Polyacrylat-Latex.
Die Molekulargewichtscharakterisierung durch GPC (vgl. Anmerkung bei Beispiel 7) ergibt
bei Beispiel 8a $M_n = 3,14 \cdot 10^4$, $M_w = 33,8 \cdot 10^7$
Molekulargewichtsverteilungskurve siehe Figur 8 ;
bei Beispiel 9a $M_n = 2,45 \cdot 10^4$, $M_w = 21,1 \cdot 10^7$
Molekulargewichtsverteilungskurve siehe Figur 9 ;
bei Beispiel 10a $M_n = 3,05 \cdot 10^4$, $M_w = 33,2 \cdot 10^7$
Molekulargewichtsverteilungskurve siehe Figur 10 ;
bei Beispiel 11a $M_n = 2,8 \cdot 10^4$, $M_w = 26,3 \cdot 10^7$
Molekulargewichtsverteilungskurve siehe Figur 11 ;
bei Beispiel 12a $M_n = 2,3 \cdot 10^4$, $M_w = 20,3 \cdot 10^7$
Molekulargewichtsverteilungskurve siehe Figur 12.

Beispiele 13 bis 18

Mittels der in Beispiel 7 beschriebenen Apparatur können auch Copolymere der phenylsubstituierten Acrylsäureester mit Alkylacrylaten hergestellt werden. Hierzu werden z. B. eingesetzt :

18 Teile (225 g) phenylsubstituierte Acrylsäureester, hergestellt nach den Beispielen 1 bis 6
2 Teile (50 g) Butylacrylat
76 Teile (950 g) VE-Wasser
0,24 Teile (3 g) Na-Laurat

In die Vorlage der Dosiereinrichtung werden gegeben :

0,012 Teile (0,15 g) Ammoniumperoxodisulfat
4 Teile (50 g) VE-Wasser

Man erhält jeweils einen weißen, stabilen Polyacrylat-Latex.
Die Molekulargewichtscharakterisierung durch GPC (vgl. Anmerkung bei Beispiel 7) ergibt
bei Beispiel 13 $M_n = 9{,}6 \cdot 10^3$, $M_w = 14{,}8 \cdot 10^7$
Molekulargewichtsverteilungskurve siehe Figur 13 ;
bei Beispiel 14 $M_n = 8{,}2 \cdot 10^3$, $M_w = 13{,}3 \cdot 10^7$
Molekulargewichtsverteilungskurve siehe Figur 14 ;
bei Beispiel 15 $M_n = 7{,}9 \cdot 10^3$, $M_w = 12{,}6 \cdot 10^7$
Molekulargewichtsverteilungskurve siehe Figur 15 ;
bei Beispiel 16 $M_n = 7{,}4 \cdot 10^3$, $M_w = 11{,}3 \cdot 10^7$
Molekulargewichtsverteilungskurve siehe Figur 16 ;
bei Beispiel 17 $M_n = 8{,}9 \cdot 10^3$, $M_w = 15{,}1 \cdot 10^7$
Molekulargewichtsverteilungskurve siehe Figur 17 ;
bei Beispiel 18 $M_n = 8{,}0 \cdot 10^3$, $M_w = 13{,}6 \cdot 10^7$
Molekulargewichtsverteilungskurve siehe Figur 18.

Beispiele 13a bis 18a

Die in den Beispielen 13 bis 18 beschriebenen Polymerisationen werden auch in Gegenwart von vernetzend wirkenden Substanzen durchgeführt. Hierzu werden z. B. eingesetzt :

18 Teile (225 g) phenylsubstituierte Acrylsäureester, hergestellt nach den Beispielen 1 bis 6
2 Teile (50 g) Butylacrylat
76 Teile (950 g) VE-Wasser
0,2 Teile (2,5 g) Diallylphthalat
0,24 Teile (3,0 g) Na-Laurat

In die Vorlage der Dosiereinrichtung werden gegeben :

0,012 Teile (0,15 g) Ammoniumperoxodisulfat
4 Teile (50 g) VE-Wasser

Man erhält jeweils einen weißen, stabilen Polyacrylat-Latex.

Die Molekulargewichtscharakterisierung durch GPC (vgl. Anmerkung bei Beispiel 7) ergibt
bei Beispiel 13a $M_n = 3{,}1 \cdot 10^4$, $M_w = 29{,}7 \cdot 10^7$
Molekulargewichtsverteilungskurve siehe Figur 19 ;
bei Beispiel 14a $M_n = 2{,}6 \cdot 10^4$, $M_w = 25{,}6 \cdot 10^7$
Molekulargewichtsverteilungskurve siehe Figur 20 ;
bei Beispiel 15a $M_n = 2{,}96 \cdot 10^4$, $M_w = 24{,}9 \cdot 10^7$
Molekulargewichtsverteilungskurve siehe Figur 21 ;
bei Beispiel 16a $M_n = 2{,}76 \cdot 10^4$, $M_w = 30{,}8 \cdot 10^7$
Molekulargewichtsverteilungskurve siehe Figur 22 ;
bei Beispiel 17a $M_n = 2{,}1 \cdot 10^4$, $M_w = 29{,}4 \cdot 10^7$
Molekulargewichtsverteilungskurve siehe Figur 23 ;
bei Beispiel 18a $M_n = 2{,}8 \cdot 10^4$, $M_w = 30{,}1 \cdot 10^7$
Molekulargewichtsverteilungskurve siehe Figur 24.

C) Herstellung der Mischung aus Polyvinylchlorid und Polyacrylsäureester

a) Pfropfpolymerisation von Vinylchlorid mit Polyacrylsäureester

Beispiele 19 bis 32

In einem 2 l-Stahlautoklaven der unter B) beschriebenen Bauart werden vorgelegt :

50 Teile (200 g) Polyacrylat-Latex, hergestellt nach den Beispielen 7, 7a, 8, 8a, 12, 12a, 13, 13a, 14, 14a, 15, 15a, 18, 18a (dies entspricht jeweils 40 g festem Polymeren und 160 g Wasser)
160 Teile (640 g) VE-Wasser
0,03 Teile (0,12 g) Sorbitmonolaurat
0,08 Teile (0,32 g) Lauroylperoxid
0,06 Teile (0,24 g) Dicetylperoxydicarbonat

Nachdem das vorgelegte Gemisch entgast und mit Stickstoff gespült ist, werden unter Rühren bei 200 bis 300 U/m

90 Teile (360 g) Vinylchlorid

in den Autoklaven eingedrückt und anschließend die Rührdrehzahl auf 350 U/m erhöht. Dann werden

0,4 Teile (1,6) Hydroxyethylcellulose gelöst in
50 Teile (200 g) VE-Wasser

zugegeben und 2 bar $N_2$-Druck aufgegeben.

Der Reaktorinhalt wird auf 60 °C aufgeheizt und bei dieser Temperatur bis zum Druckabfall um 3 bar innerhalb von ca. 6 Stunden auspolymerisiert.

Nach Erkalten, Rest-VC-Entgasung, Abfiltrieren, Waschen und Trocknen erhält man ein rieselfähiges Pulver, dessen mittlerer Korndurchmesser bei 100 bis 150 µm liegt.

Ermittelte Werte für Schlagzähigkeit und Transparenz sind Tabelle 1 zu entnehmen.

b) Mischen von Polyacrylsäureester (PA) und Masse-Polyvinylchlorid (M-PVC)

Beispiele 33 bis 46

100 Teile M-PVC (hergestellt z. B. nach DE-OS 15 20 595) werden im Labormischer mit
55 Teile Polyacrylat-Latex mit 20 Gewichtsprozent Polymeranteil (hergestellt nach den Beispielen 7, 7a, 8, 8a, 12, 12a, 13, 13a, 14, 14a, 15, 15a, 18, 18a)
vermischt und bei 50 °C 12 Stunden im Vakuum getrocknet.

Man erhält ein nicht mehr rieselfähiges, z. B. auf der Walze verarbeitbares Pulver.

Ermittelte Werte für Schlagzähigkeit und Transparenz sind Tabelle 1 zu entnehmen.

c) Mischen von Polyacrylsäureester (PA) und Suspensions-Polyvinylchlorid (S-PVC)

Beispiele 47 bis 60

100 Teile S-PVC (hergestellt z. B. nach DE-OS 15 95 431) werden im Labormischer mit
55 Teile PA-Latex (hergestellt nach den Beispielen 7, 7a, 8, 8a, 12, 12a, 13, 13a, 14, 14a, 15, 15a, 18, 18a)
vermischt und bei 50 °C im Vakuum getrocknet.

Man erhält ein nicht mehr rieselfähiges, z. B. auf der Walze verarbeitbares Pulver.

Ermittelte Werte für Schlagzähigkeit und Transparenz sind Tabelle 1 zu entnehmen.

d) Mischen von PA und Emulsions-Polyvinylchlorid (E-PVC)

Beispiele 61 bis 65

100 Teile (5 000 g) E-PVC-Latex mit 45 % PVC (Herstellung z. B. nach DE-OS 25 31 780) und
22,5 Teile (1 125 g) PA-Latex (mit 20 Gewichtsprozent Polymeranteil, Herstellung nach den Beispielen 7a, 8a, 12a, 13a, 14a)
werden zusammen in einer Nubilosa-Laborsprühtrocknungsanlage sprühgetrocknet. Man erhält ein begrenzt rieselfähiges Pulver.

Ermittelte Werte für Schlagzähigkeit und Transparenz sind Tabelle 1 zu entnehmen.

e) Heißmischen von Polymerisaten der erfindungsgemäßen phenylsubstituierten Acrylsäureester mit PVC

Beispiele 66 bis 70

Zunächst werden die Polyacrylat-Latices, hergestellt nach den Beispielen 7a, 8a, 12a, 13a, 14a, so aufgearbeitet, daß das reine Polymerisat vorliegt. Hierzu werden jeweils von o. a. 250 g Polyacrylat-Latex unter Rühren mit 100 g Methanol und 100 g 5 %iger wäßriger Na-Formiat-Lösung versetzt. Das so ausgefällte Polyacrylat wird auf einer Fritte abfiltriert, mit Methanol und VE-Wasser gewaschen und bei 40 °C 24 Stunden im Vakuum getrocknet. 10 Teile (40 g) von derart erhaltenem Polymerisat werden jeweils mit 90 Teilen (360 g) M-PVC (hergestellt z. B. nach DE-OS 15 95 431) unter Verwendung der für alle Verarbeitungen, später beschriebenen Verarbeitungs- und Stabilisierungshilfsmittel auf der Walze bei 185 °C 5 bis 15 Minuten vermischt. Man erhält ein Walzfell, das in üblicher Weise weiter zu Preßplatten verarbeitet wird.

Ermittelte Werte für Schlagzähigkeit und Transparenz sind Tabelle 1 zu entnehmen.

Tabelle 1

| (X) Modifiziertes Polyvinylchlorid | (Y) Transmission, Schichtdicke 2 mm, Wellenlänge 600 nm | (Z) Kerbschlagzähigkeit in $kJ/m^2$, 4 mm-Preßplatten nach DIN 53 453 |
|---|---|---|
| Masse-Polyvinylchlorid nach DE-OS 15 20 595 (Standardprobe) | 81 | 2 |
| DE-AS 20 13 020 | 57 | 22 |
| Erfindungsgemäß | | |
| Beispiel 19 | 87 | 38 |
| Beispiel 20 | 88 | 43 |
| Beispiel 21 | 84 | 39 |
| Beispiel 22 | 86 | 45 |
| Beispiel 23 | 80 | 39 |
| Beispiel 24 | 80 | 40 |
| Beispiel 25 | 85 | 41 |
| Beispiel 26 | 85 | 46 |
| Beispiel 27 | 84 | 39 |
| Beispiel 28 | 84 | 43 |
| Beispiel 29 | 82 | 22 |
| Beispiel 30 | 82 | 23 |
| Beispiel 31 | 81 | 44 |
| Beispiel 32 | 82 | 44 |
| Beispiel 33 | 85 | 33 |
| Beispiel 34 | 85 | 40 |
| Beispiel 35 | 82 | 34 |
| Beispiel 36 | 84 | 42 |
| Beispiel 37 | 79 | 36 |
| Beispiel 38 | 78 | 40 |

Tabelle 1 (Fortsetzung)

| (X) | (Y) | (Z) |
|---|---|---|
| Beispiel 39 | 82 | 40 |
| Beispiel 40 | 82 | 40 |
| Beispiel 41 | 82 | 37 |
| Beispiel 42 | 81 | 41 |
| Beispiel 43 | 78 | 21 |
| Beispiel 44 | 79 | 20 |
| Beispiel 45 | 81 | 41 |
| Beispiel 46 | 79 | 43 |
| Beispiel 47 | 84 | 36 |
| Beispiel 48 | 84 | 36 |
| Beispiel 49 | 81 | 40 |
| Beispiel 50 | 80 | 41 |
| Beispiel 51 | 77 | 36 |
| Beispiel 52 | 78 | 37 |
| Beispiel 53 | 81 | 42 |
| Beispiel 54 | 80 | 44 |
| Beispiel 55 | 79 | 40 |
| Beispiel 56 | 80 | 41 |
| Beispiel 57 | 76 | 22 |
| Beispiel 58 | 78 | 21 |
| Beispiel 59 | 77 | 42 |
| Beispiel 60 | 78 | 42 |
| Beispiel 61 | 80 | 38 |
| Beispiel 62 | 80 | 35 |
| Beispiel 63 | 79 | 36 |
| Beispiel 64 | 78 | 33 |
| Beispiel 65 | 77 | 40 |
| Beispiel 66 | 80 | 35 |
| Beispiel 67 | 81 | 34 |
| Beispiel 68 | 78 | 37 |
| Beispiel 69 | 79 | 40 |
| Beispiel 70 | 78 | 39 |

Für die Ausprüfungen wurde folgende Konfektionierungs-Rezeptur angewendet :

| | |
|---|---|
| Polyvinylchlorid (bzw. modifiziertes Polyvinylchlorid) | 100 Gewichtsteile |
| Ba-Cd-Stabilisator | 2,5 Gewichtsteile |
| Polyethylen-Gleitmittel | 0,15 Gewichtsteile |
| Polymethylmethacrylat-Verarbeitungshilfsmittel | 1,2 Gewichtsteile |
| Flüssiger partieller Fettsäureester des Glycerins | 0,4 Gewichtsteile |
| Festes neutrales Glycerin-Esterwachs | 0,4 Gewichtsteile |

Zur Herstellung der Prüfkörper wurden zunächst Walzfelle bei 185 °C Walzentemperatur und 5 Minuten Walzdauer hergestellt. Nach Verpressen zu 2 bzw. 4 mm dicken Platten wurden die in Tabelle 1 angegebenen Transmissions- bzw. Kerbschlagzähigkeitsmessungen vorgenommen.

Bei der Wertung der Transparenz ist zu bedenken, daß Polyvinylchlorid aufgrund seiner Neigung zur Zersetzung beim Verarbeitungsprozeß, verglichen mit anderen Thermoplasten, in besonderer Weise stabilisiert werden muß. Hierdurch wird die Transparenz, verglichen mit anderen Thermoplasten, verschlechtert. Masse-Polyvinylchlorid als reinstes Polyvinylchlorid sollte die bei diesem Thermoplasten größtmögliche Transparenz zeigen. Wenn daher ein schlagfestes, d. h. modifiziertes Polyvinylchlorid Transparenzen aufweist, die nahe an die Transparenz des reinen Masse-Polyvinylchlorids heranreichen, so müßten diese Transparenzen annähernd das auf diesem Gebiete höchstmögliche darstellen. Zeigt sich aber, wie durch einige unserer Beispiele belegt wurde, daß das modifizierte Polyvinylchlorid noch deutlich bessere Transparenzen aufweist als Masse-Polyvinylchlorid, so handelt es sich um einen echten überraschenden Effekt.

Dabei muß weiterhin in Betracht gezogen werden, daß die Transparenz, auch bei Masse-Polyvinylchlorid, von der jeweiligen Rezeptur, d. h. den (für die Verarbeitung unerläßlichen) Zusätzen an Gleitmittel, Stabilisatoren und dergleichen abhängig ist und nur für absolut gleiche Rezepturen und natürlich gleiche Schichtdicke Vergleiche gezogen werden dürfen.

Des weiteren ist noch auf die besonders hohe Schlagzähigkeit des erfindungsgemäß modifizierten Polyvinylchlorids hinzuweisen.

**Patentansprüche**

1. Polymere Phenylalkyl-acrylsäureester der Formel

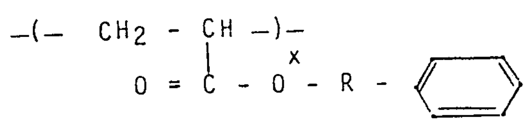

,

in der R einen geradkettigen oder verzweigten Alkylenrest mit 3 bis 4 Kohlenstoffatomen bedeutet, der gegebenenfalls durch ein Ethersauerstoffatom unterbrochen sein kann, wobei der geradkettige Anteil wenigstens 3 Kohlenstoffatome enthält, und x für eine Zahl von 20 bis 500 000 steht.

2. Polymere Phenylalkyl-acrylsäureester der Formel

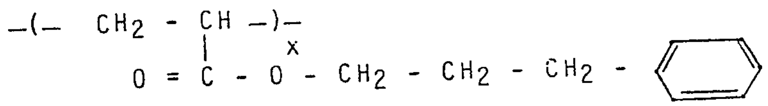

,

in der x für eine Zahl von 50 bis 5 000 steht.

3. Verwendung eines polymeren Phenylalkyl-acrylsäureester nach Anspruch 1 oder 2 als schlagzäh machende Komponente in hochtransparenten schlagzähen Formmassen auf der Basis von Polyvinylchlorid.

4. Verwendung nach Anspruch 3, dadurch gekennzeichnet, daß die schlagzäh machende Komponente in Mengen von 5 bis 30 Gewichtsprozent, bezogen auf die Mischung aus Polyvinylchlorid bzw. Vinylchloridmischpolymerisat und schlagzäh machende Komponente, eingesetzt wird.

5. Herstellung der polymeren Phenyl-acrylsäureester nach Anspruch 1 oder 2, dadurch gekennzeichnet, daß phenylsubstituierte Acrylsäureester der Formel

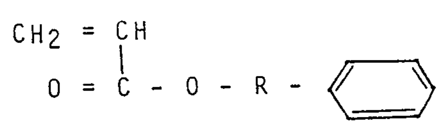

,

in der R einen geradkettigen oder verzweigten Alkylenrest mit 3 bis 4 Kohlenstoffatomen bedeutet, der

gegebenenfalls durch eine Ethersauerstoffbrücke unterbrochen ist, wobei der geradkettige Anteil mindestens 3 Kohlenstoffatome enthält, in Emulsion, Suspension, Masse oder Lösung in Gegenwart von Radikalkatalysatoren polymerisierenden Bedingungen unterworfen werden.

6. Herstellung von polymeren Phenyl-acrylsäureestern nach Anspruch 1 oder 2, dadurch gekennzeichnet, daß phenylsubstituierte Acrylsäureester der Formel

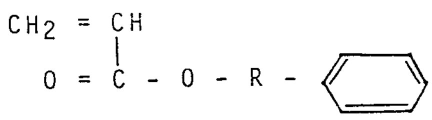
,

in der R einen geradkettigen oder verzweigten Alkylenrest mit 3 bis 4 Kohlenstoffatomen bedeutet, der gegebenenfalls durch eine Ethersauerstoffbrücke unterbrochen ist, wobei der geradkettige Anteil mindestens 3 Kohlenstoffatome enthält, in wäßriger Emulsion in Gegenwart von ionogenen oder nichtionogenen Emulgatoren und von wasserlöslichen Katalysatoren bei 5 bis 120 °C polymerisiert werden.

**Claims**

1. A polymeric phenylalkyl-acrylic acid ester of the formula

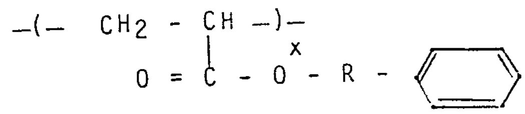
,

where R is straight-chain or branched alkylene of 3 or 4 carbon atoms, optionally interrupted by an ether oxygen atom, the straight-chain moiety having at least 3 carbon atoms, and x is a number from 20 to 500,000.

2. A polymeric phenylalkyl-acrylic acid ester of the formula

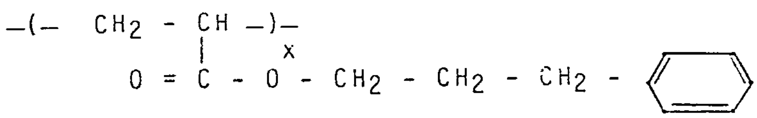
,

where x is a number from 50 to 5,000.

3. The use of a polymeric phenylalkyl-acrylic acid ester according to claim 1 or 2 as impact-resistance imparting component in highly transparent impact-resistant mouldings based on polyvinyl chloride.

4. A use according to claim 3, characterised in that the impact-resistance-imparting component is employed in an amount of 5 to 30 per cent by weight, based on the mixture of polyvinyl chloride and/or vinyl chloride copolymer and impact-resistance-imparting component.

5. The production of a polymeric phenyl-acrylic acid ester according to claim 1 or 2, characterised in that a phenyl-substituted acrylic acid ester of the formula

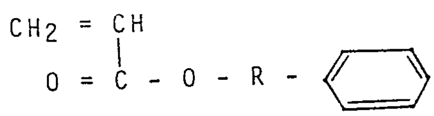
,

where R is straight-chain or branched alkylene of 3 or 4 carbon atoms, optionally interrupted by an ether oxygen bridge, the straight-chain moiety having at least 3 carbon atoms, is subjected to polymerisation conditions in emulsion, suspension, bulk or solution in the presence of a free radical catalyst.

6. The production of a polymeric phenyl-acrylic acid ester according to claim 1 or 2 characterised in that a phenyl-substituted acrylic acid ester of the formula

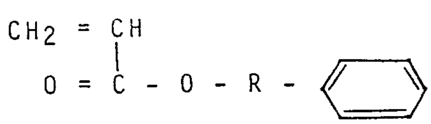
,

where R is straight-chain or branched alkylene of 3 or 4 carbon atoms, optionally interrupted by an ether oxygen bridge, the straight-chain moiety having at least 3 carbon atoms, is polymerised at 5 to 120 °C in aqueous emulsion in the presence of an ionogenic or non-ionogenic emulsifier and a water-soluble catalyst.

**Revendications**

1. Polymères d'acrylates de phénylalkyle de la formule :

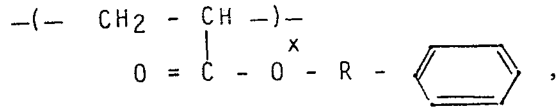

dans laquelle R représente un radical alkylène à chaîne droite ou ramifié contenant de 3 à 4 atomes de carbone, qui peut éventuellement être interrompu par un atome d'oxygène d'éther, la partie à chaîne droite contenant au moins 3 atomes de carbone, et x représente un nombre de 30 à 500 000.

2. Polymères d'acrylates de phényl-alkyle de la formule :

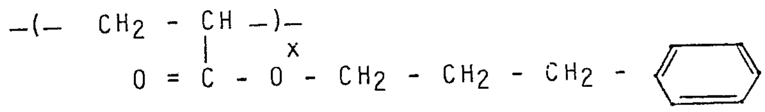

dans laquelle x représente un nombre de 50 à 5 000.

3. Utilisation d'un polymère d'acrylate de phénylalkyle selon la revendication 1 ou 2 comme constituant donnant de la résilience dans des matières à mouler résilientes très transparentes à base de polychlorure de vinyle.

4. Utilisation selon la revendication 3, caractérisée par le fait que l'on utilise le constituant donnant de la résilience en quantités de 5 à 30 % en poids relativement au mélange de polychlorure de vinyle ou de produit de copolymérisation de chlorure de vinyle et de constituant donnant de la résilience.

5. Préparation des polymères d'acrylates de phénylalkyle selon la revendication 1 ou 2, caractérisée par le fait que l'on soumet à des conditions de polymérisation, en émulsion, en suspension, en masse ou en solution, en présence de catalyseurs à radicaux, des esters d'acide acrylique à substituant phényle de la formule :

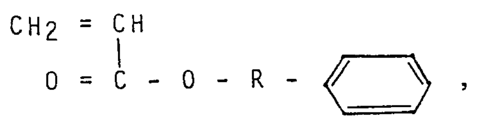

dans laquelle R représente un radical alkylène à chaîne droite ou ramifié contenant de 3 à 4 atomes de carbone, qui est éventuellement interrompu par un pont oxygène d'éther, la partie à chaîne droite contenant au moins 3 atomes de carbone.

6. Préparation de polymères d'acrylate de phénylalkyle selon la revendication 1 ou 2, caractérisée par le fait que l'on polymérise en émulsion aqueuse, en présence d'émulsifiants ionogènes ou non ionogènes et de catalyseurs hydrosolubles, à une température de 5 à 120 °C, des esters d'acide acrylique à substituant phényle de la formule :

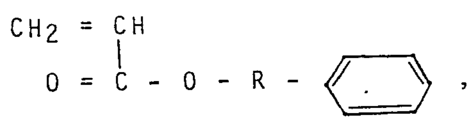

dans laquelle R représente un radical alkylène à chaîne droite ou ramifié contenant de 3 à 4 atomes de carbone, qui est éventuellement interrompu par un pont oxygène d'éther, la partie à chaîne droite contenant au moins 3 atomes de carbone.

FIG. 1

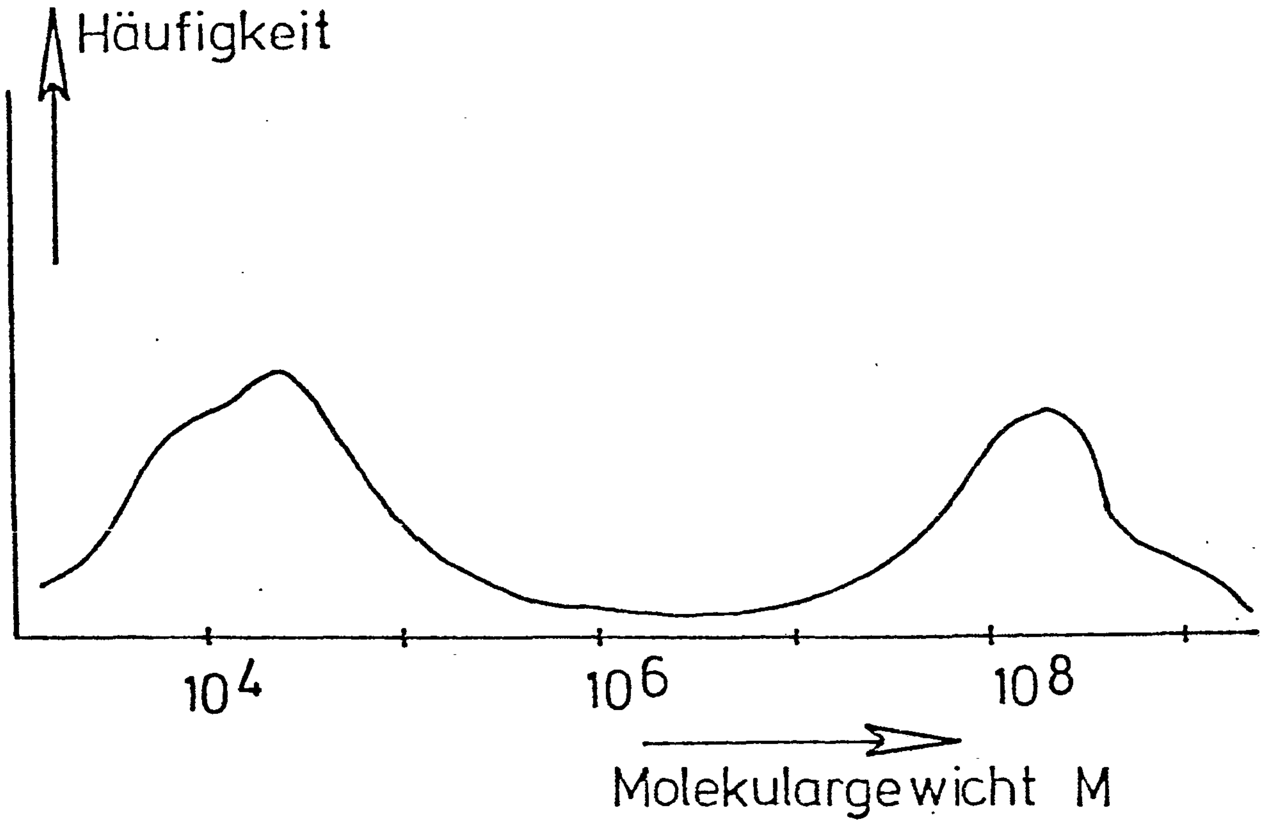
Häufigkeit
10^4
10^6
10^8
Molekulargewicht M

FIG. 2

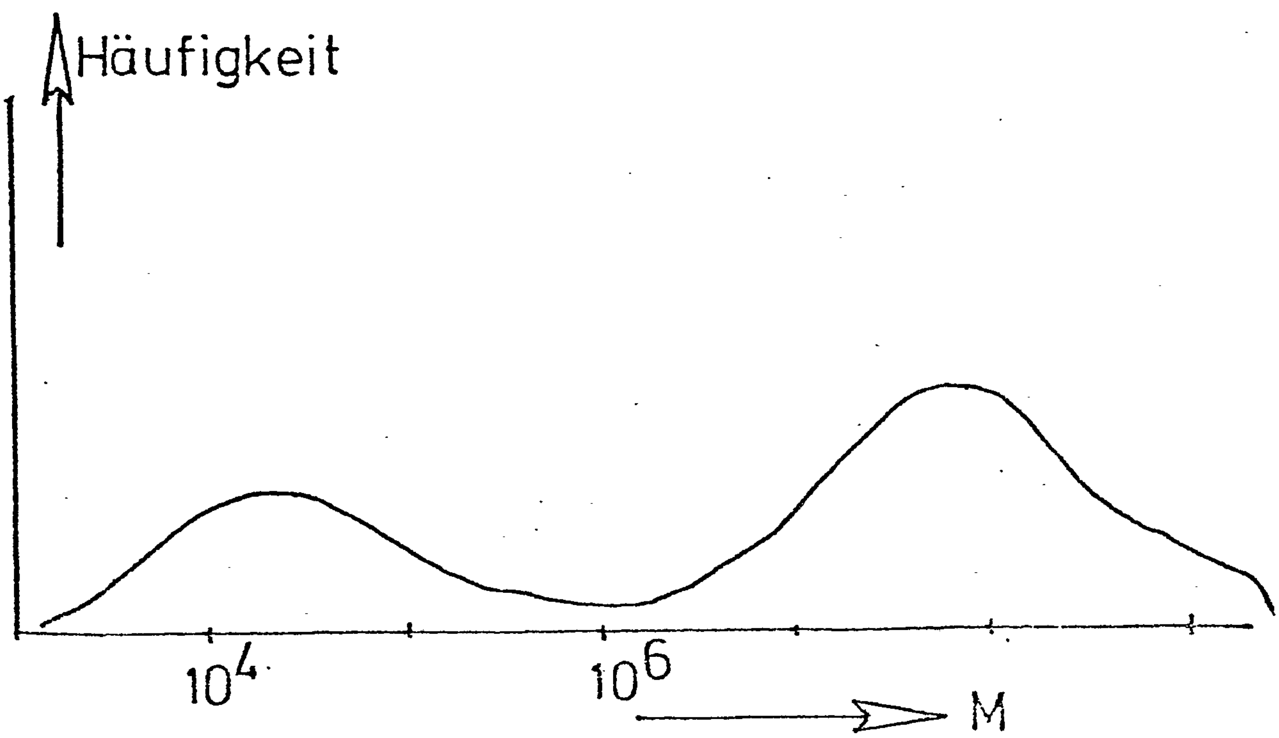
Häufigkeit
10^4
10^6
M

FIG. 3

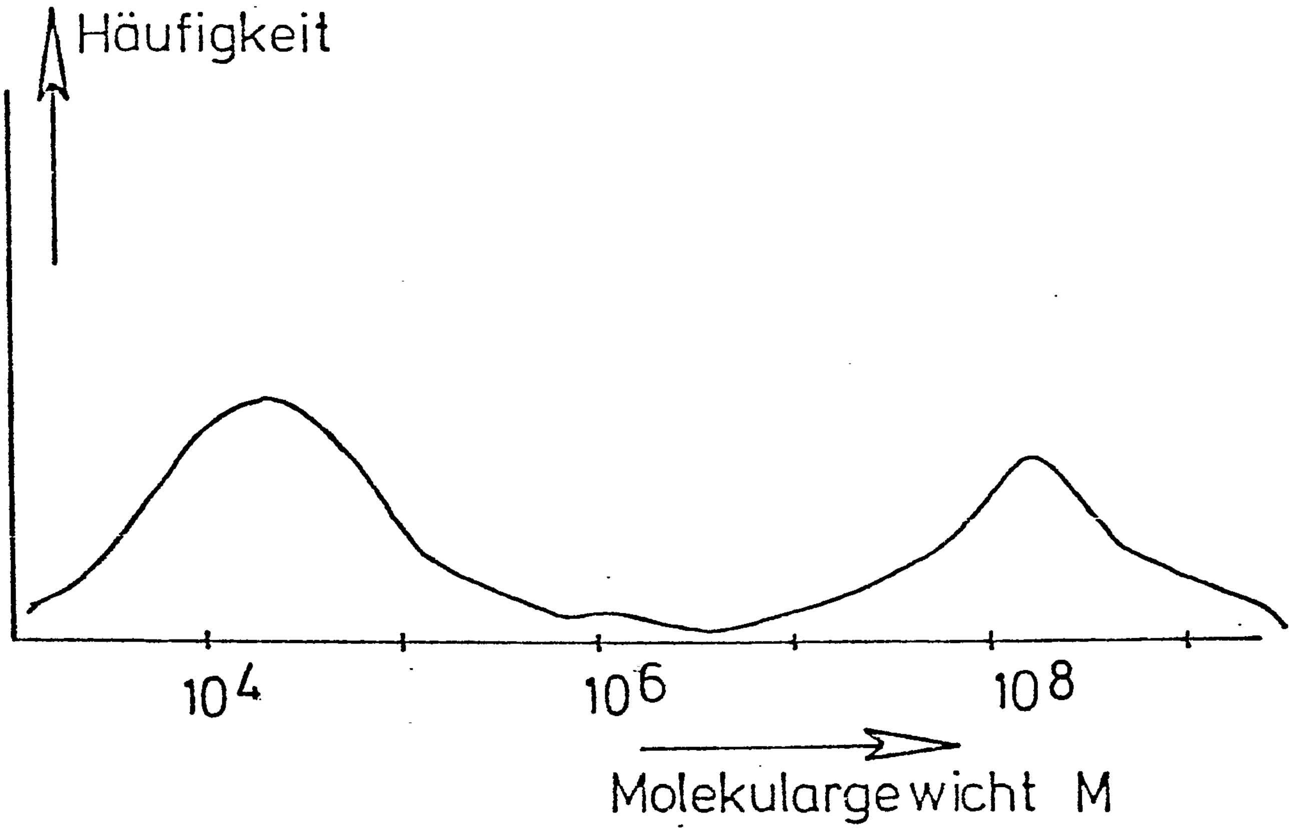
Häufigkeit
10^4
10^6
10^8
Molekulargewicht M

FIG. 4

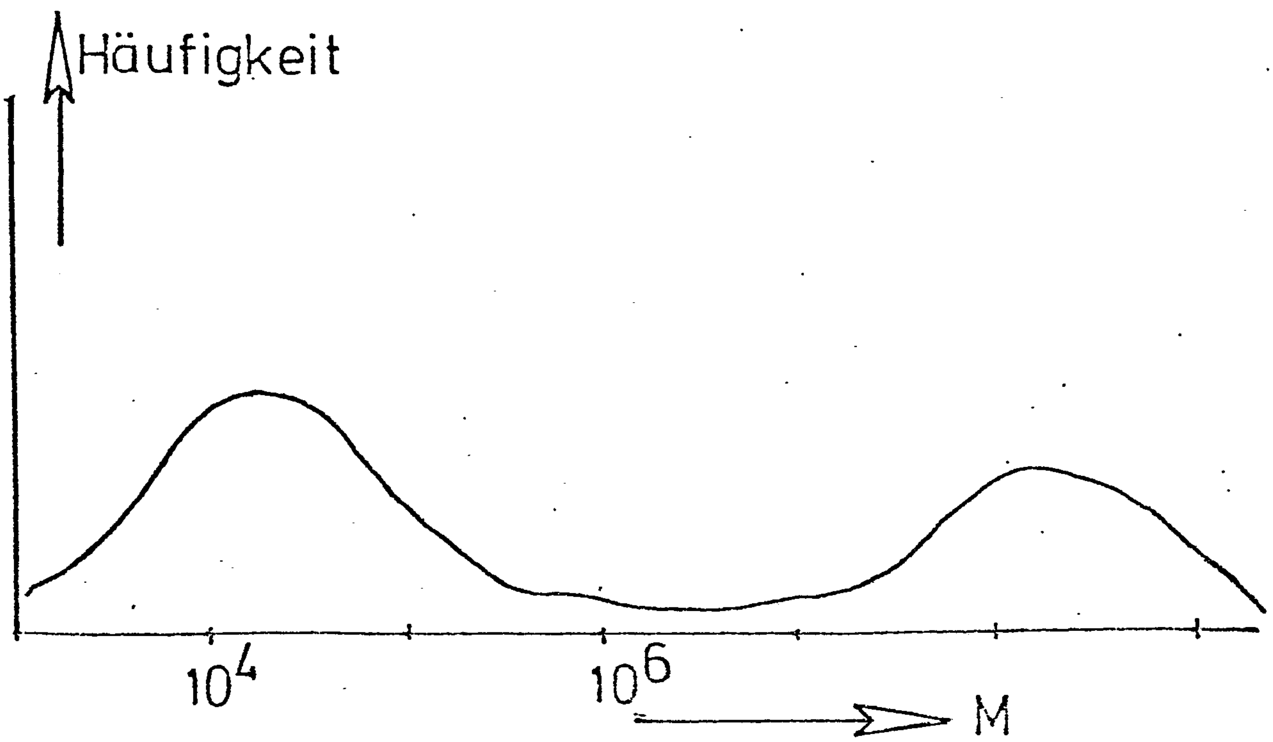
Häufigkeit
10^4
10^6
M

FIG. 5

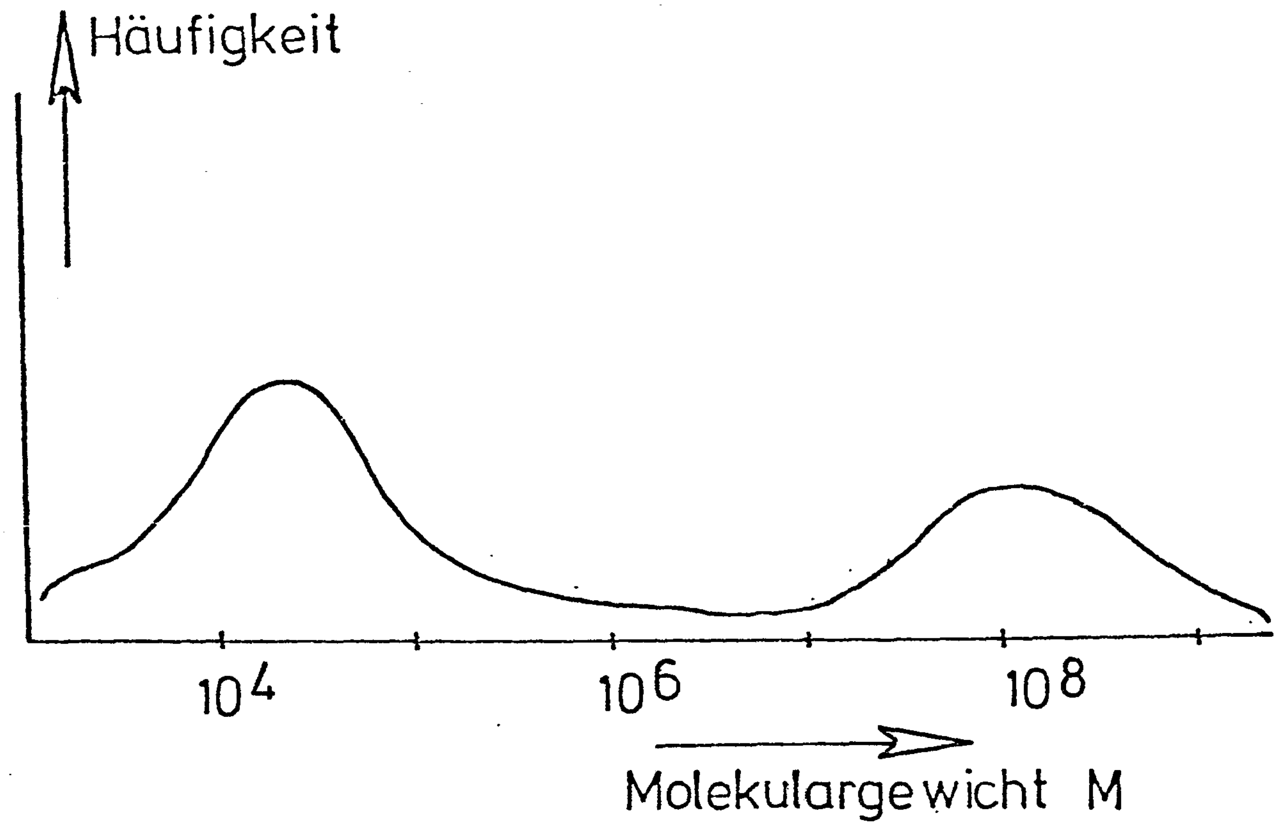
Häufigkeit
10^4
10^6
10^8
Molekulargewicht M

FIG. 6

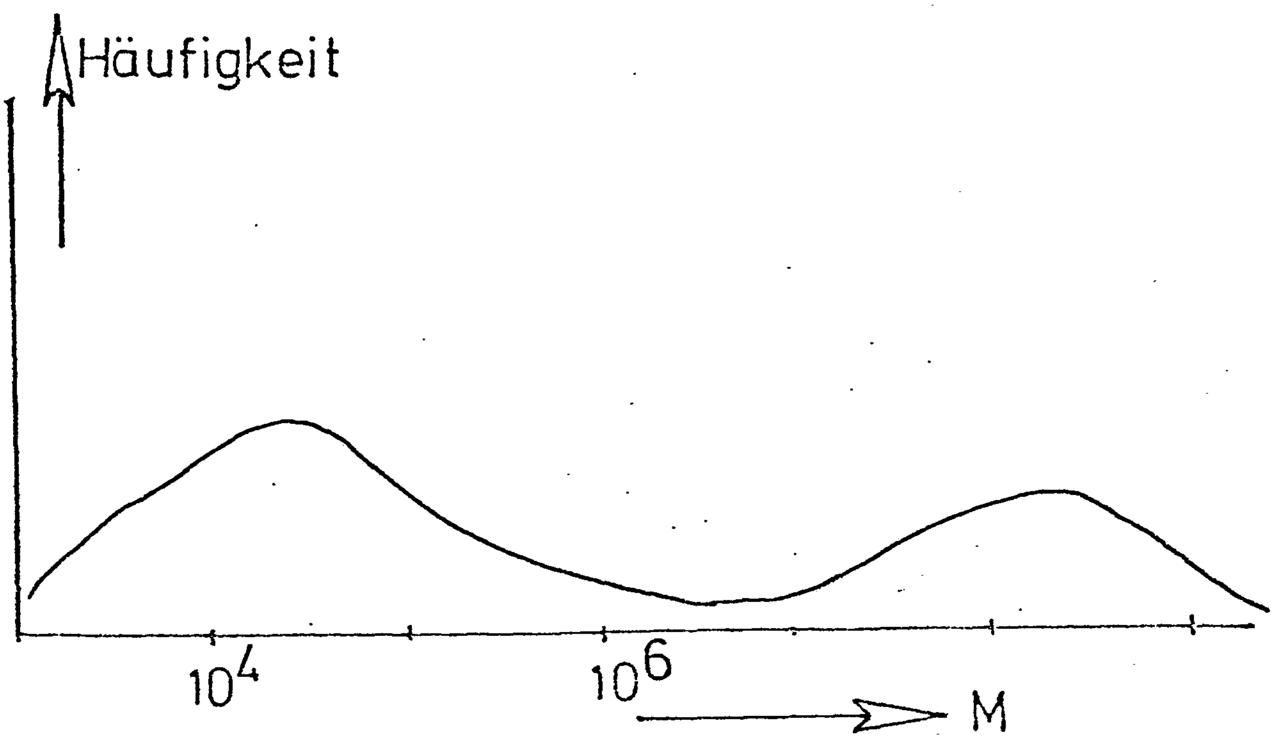
Häufigkeit
10^4
10^6
M

FIG. 7

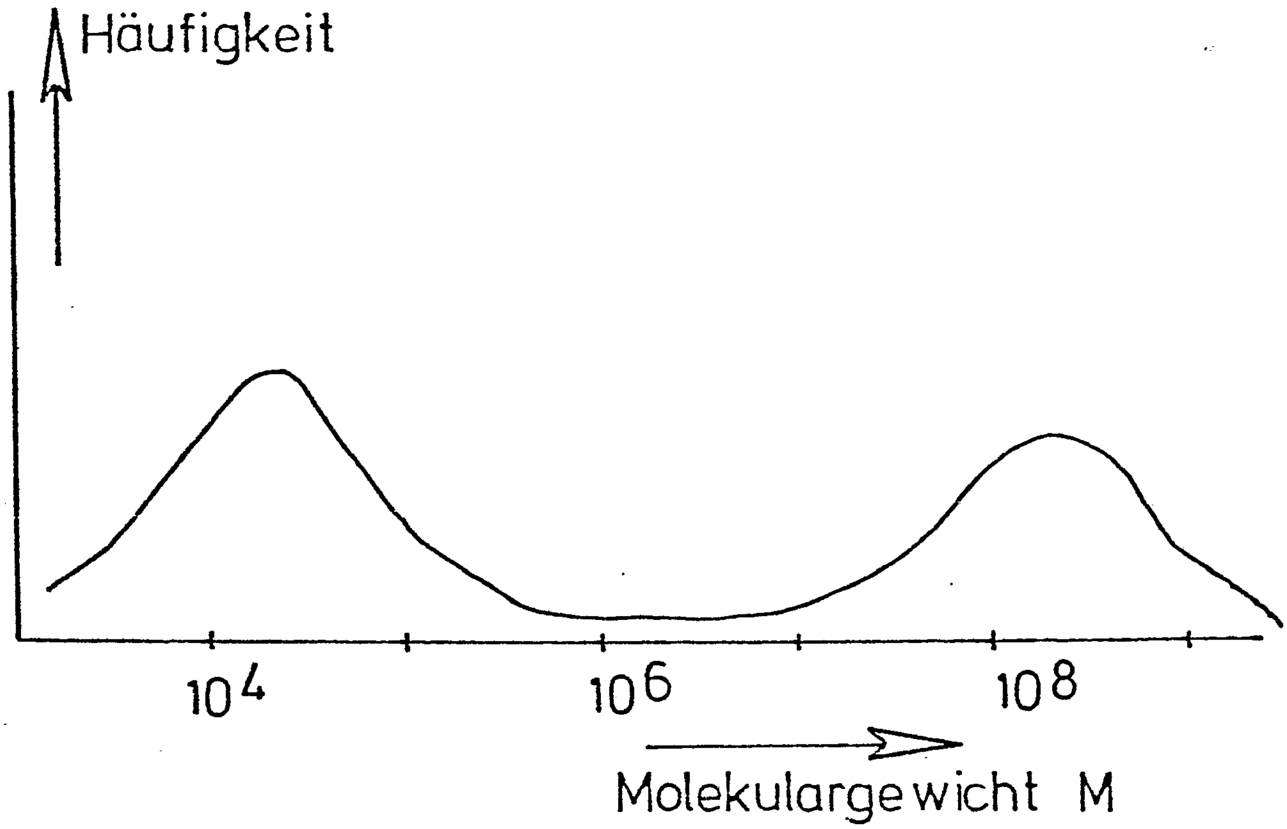
Häufigkeit
10^4
10^6
10^8
Molekulargewicht M

FIG. 8

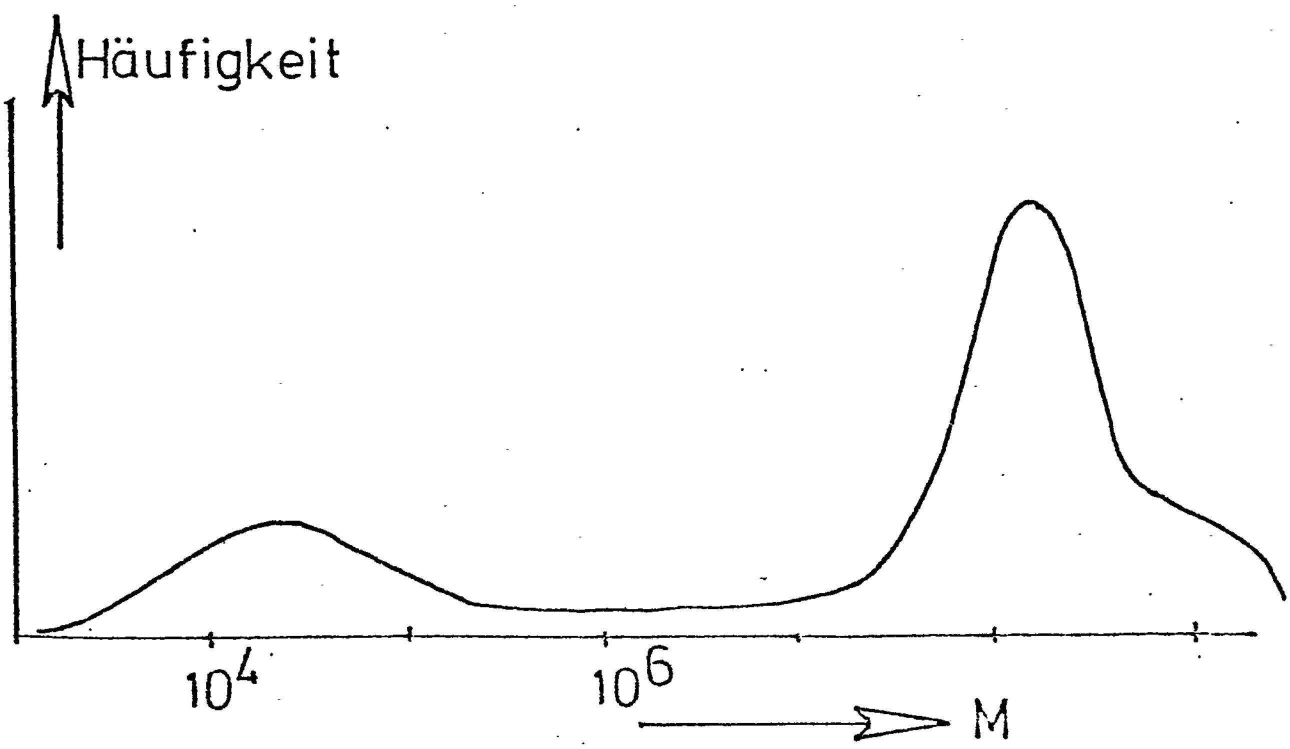
Häufigkeit
10^4
10^6
M

FIG. 9

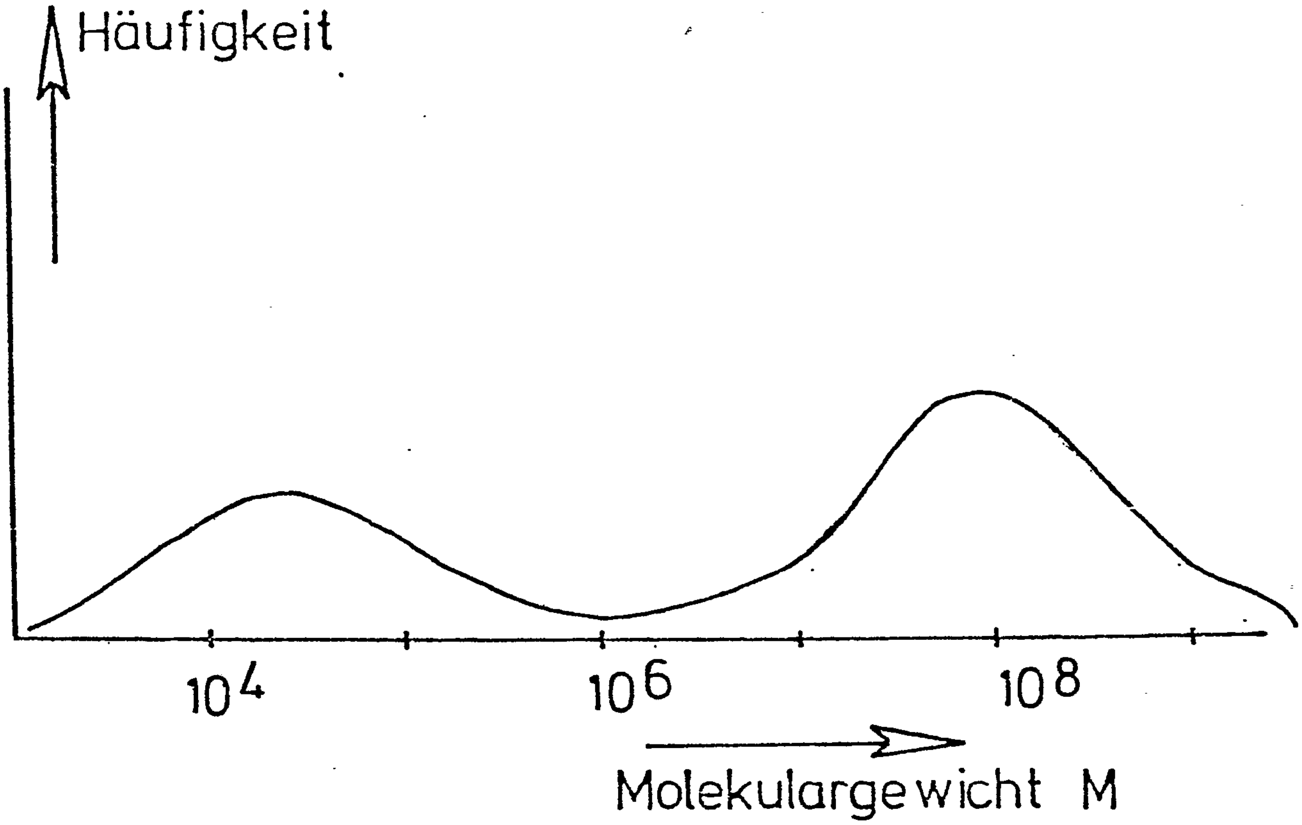
Häufigkeit
10^4
10^6
10^8
Molekulargewicht M

FIG. 10

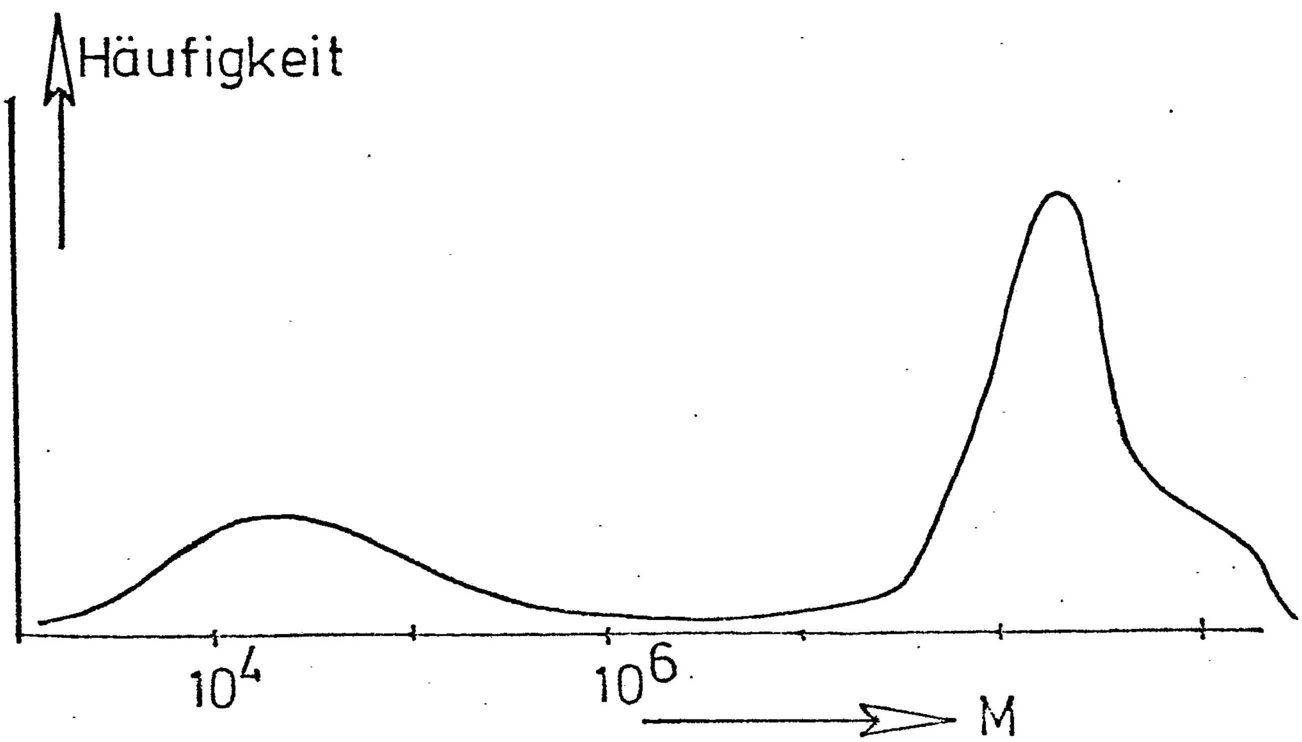
Häufigkeit
10^4
10^6
M

FIG. 11

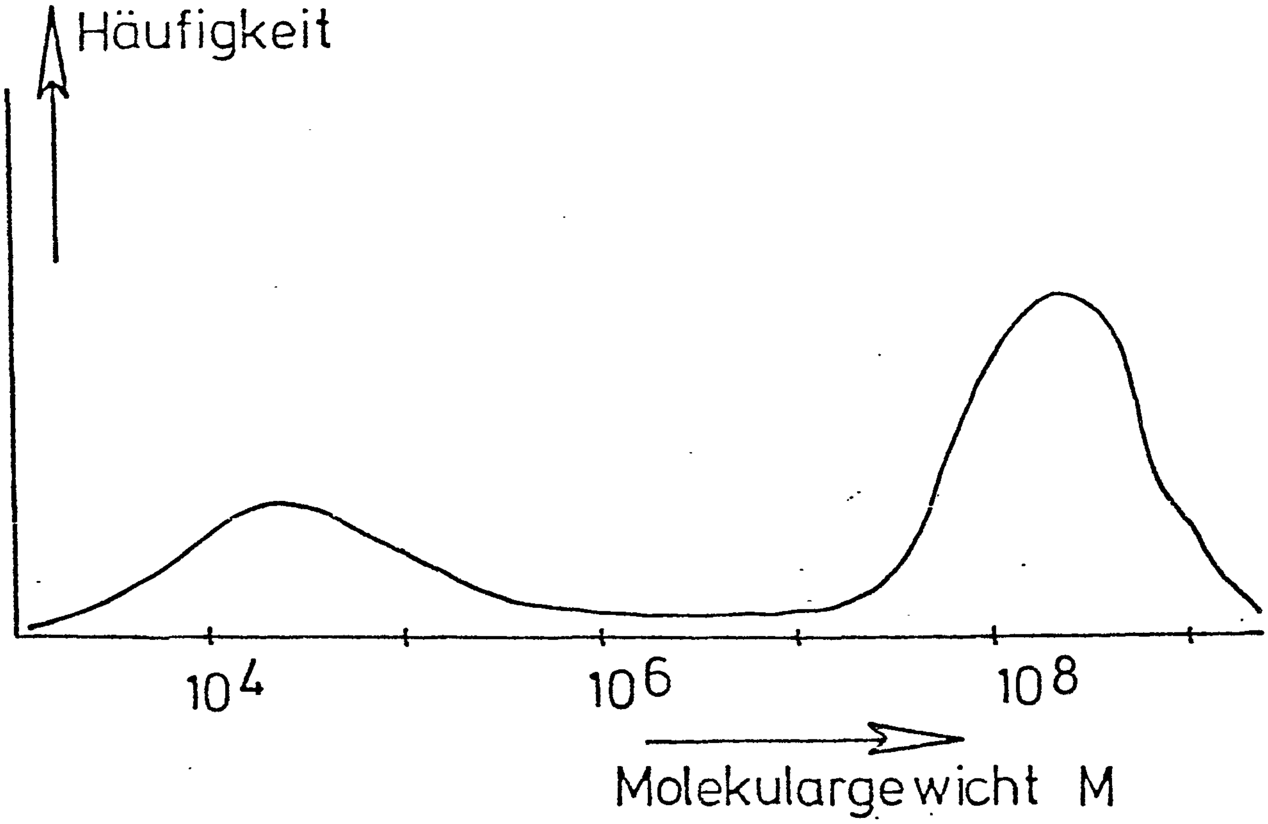
Häufigkeit
10⁴
10⁶
10⁸
Molekulargewicht M

FIG.12

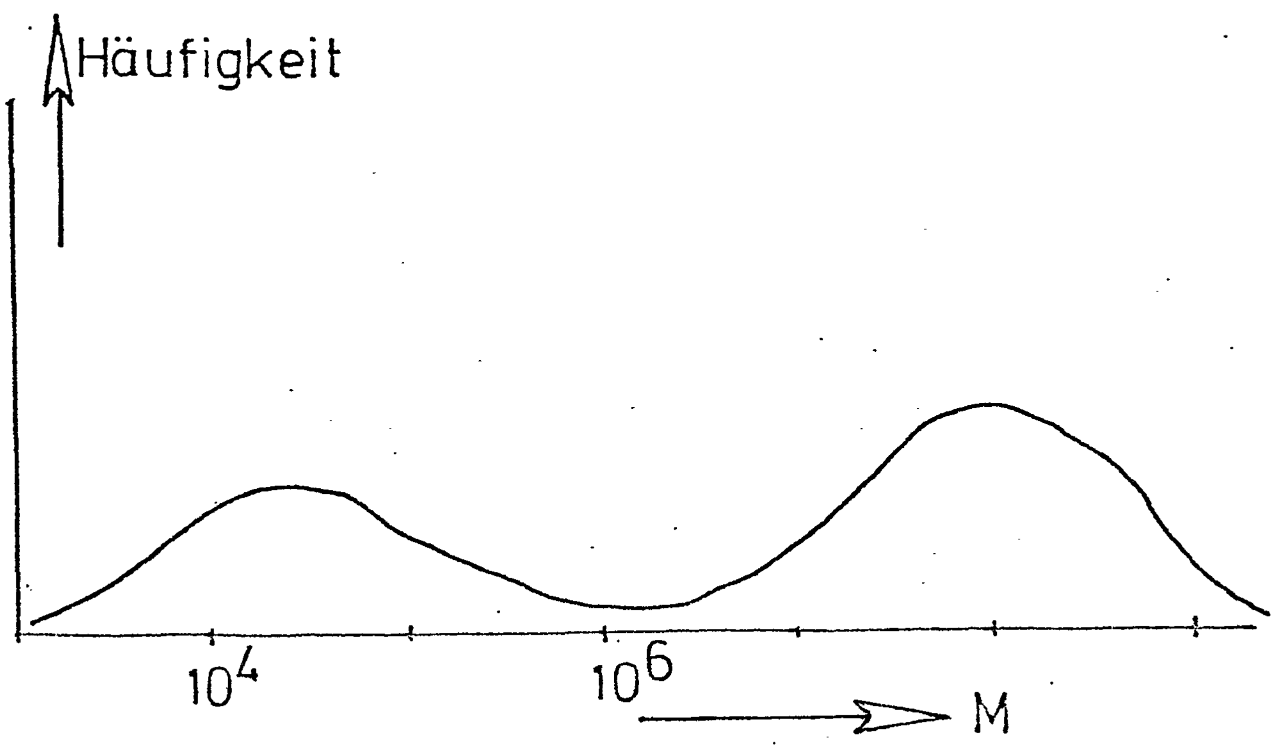
Häufigkeit
10⁴
10⁶
M

FIG. 13

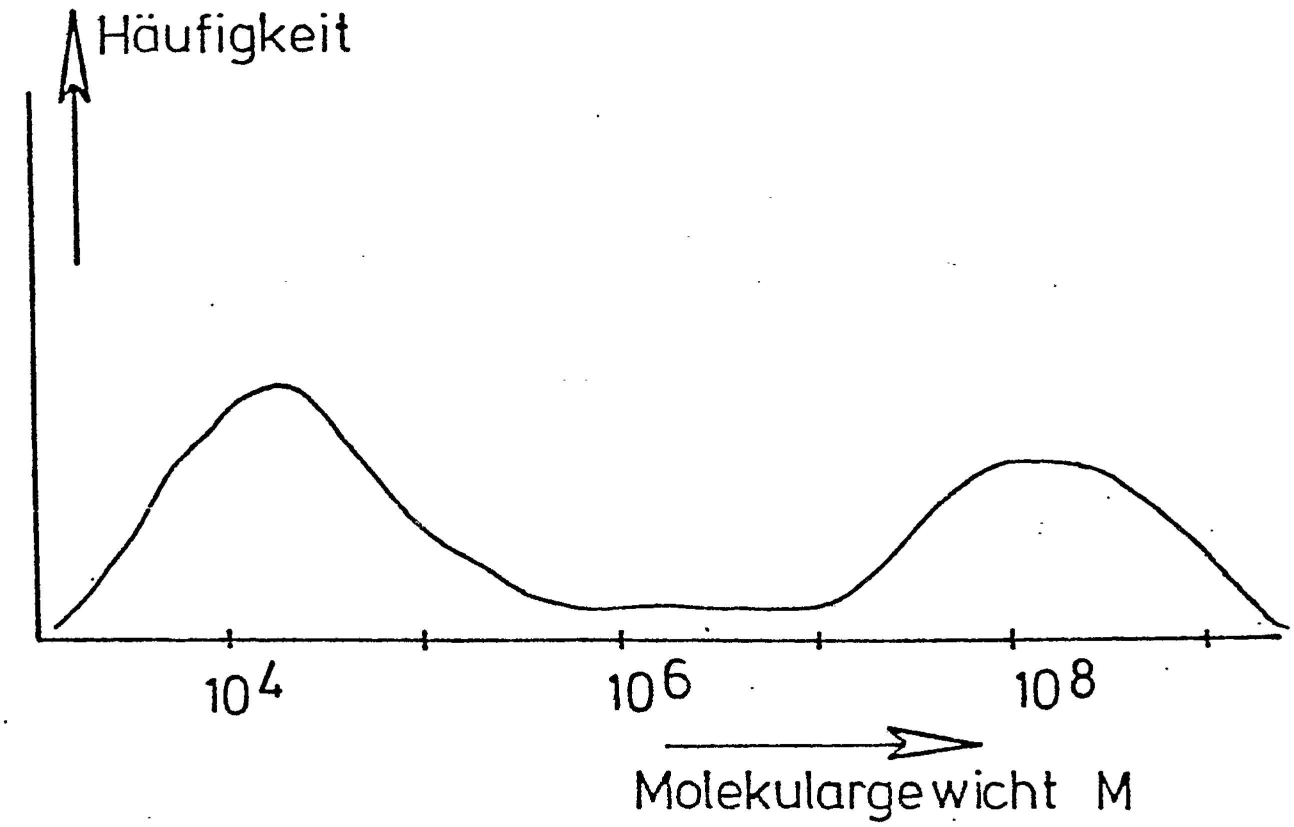
Häufigkeit
10⁴
10⁶
10⁸
Molekulargewicht M

FIG. 14

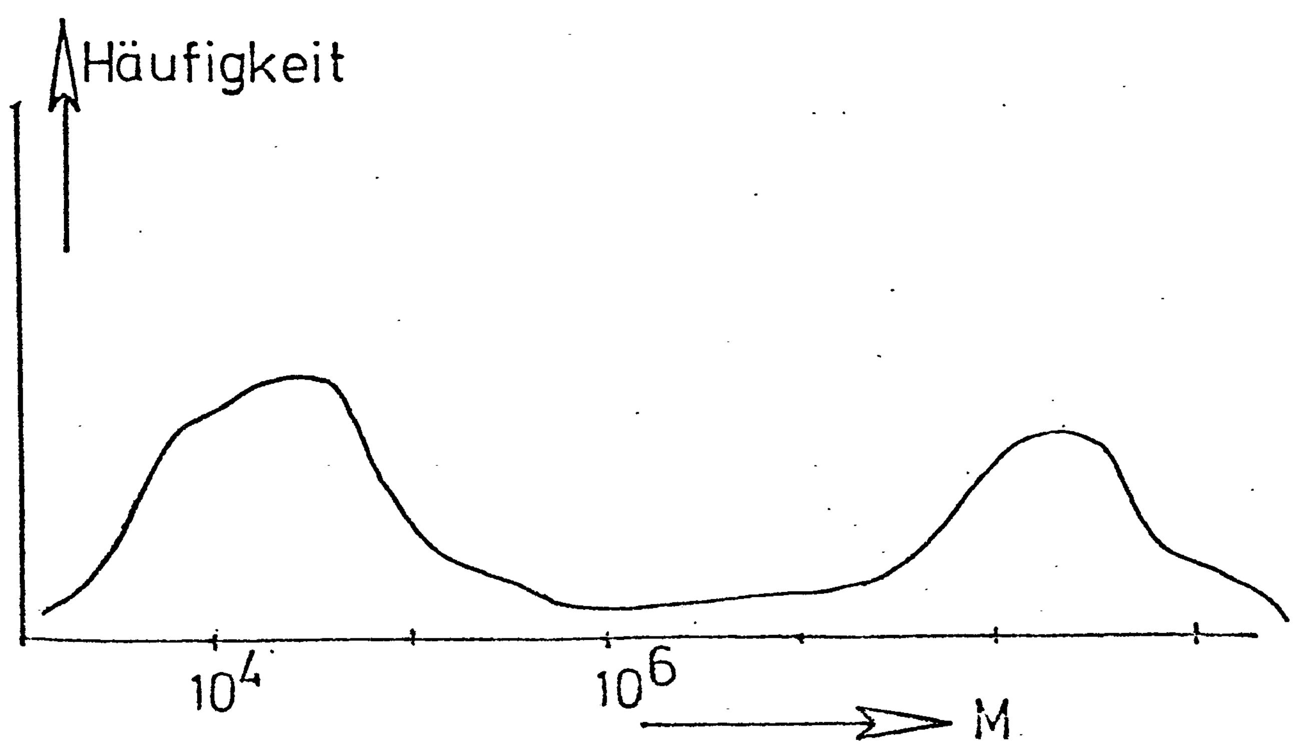
Häufigkeit
10⁴
10⁶
M

FIG.15

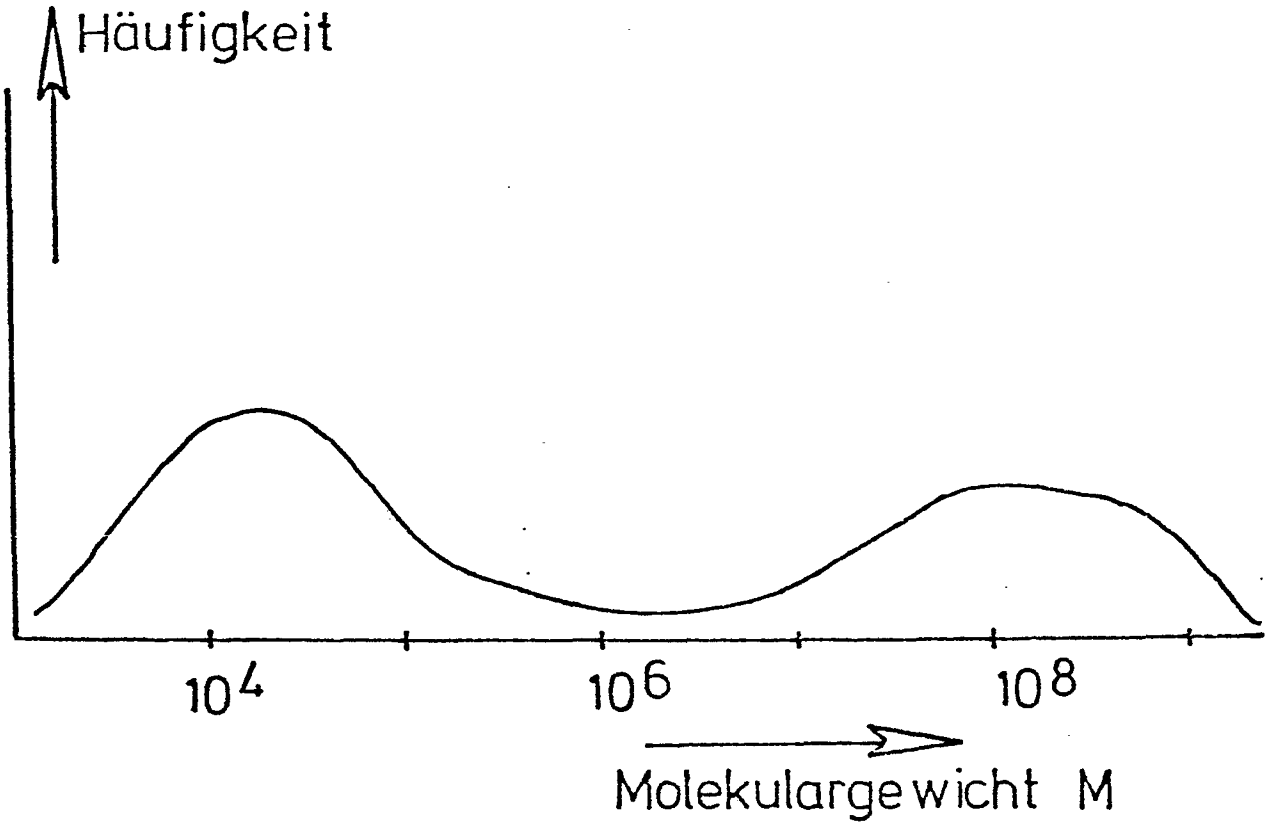
Häufigkeit
10^4
10^6
10^8
Molekulargewicht M

FIG. 16

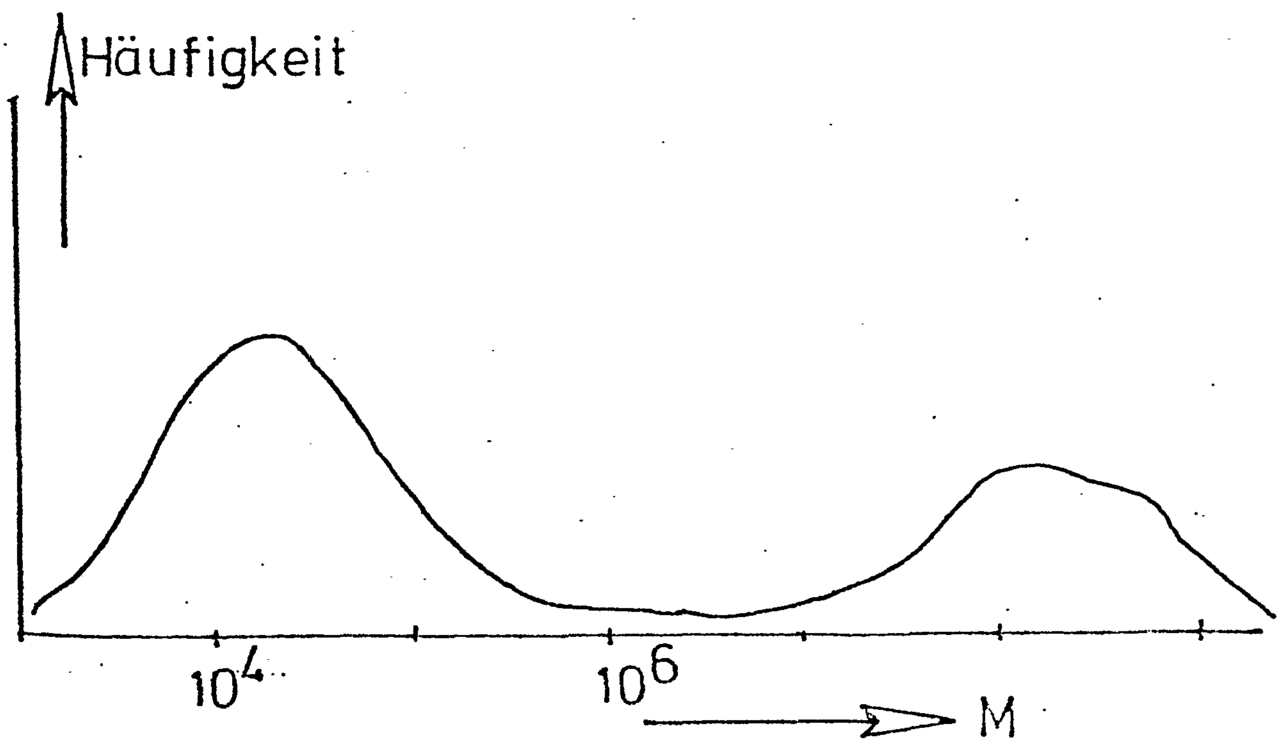
Häufigkeit
10^4
10^6
M

FIG. 17

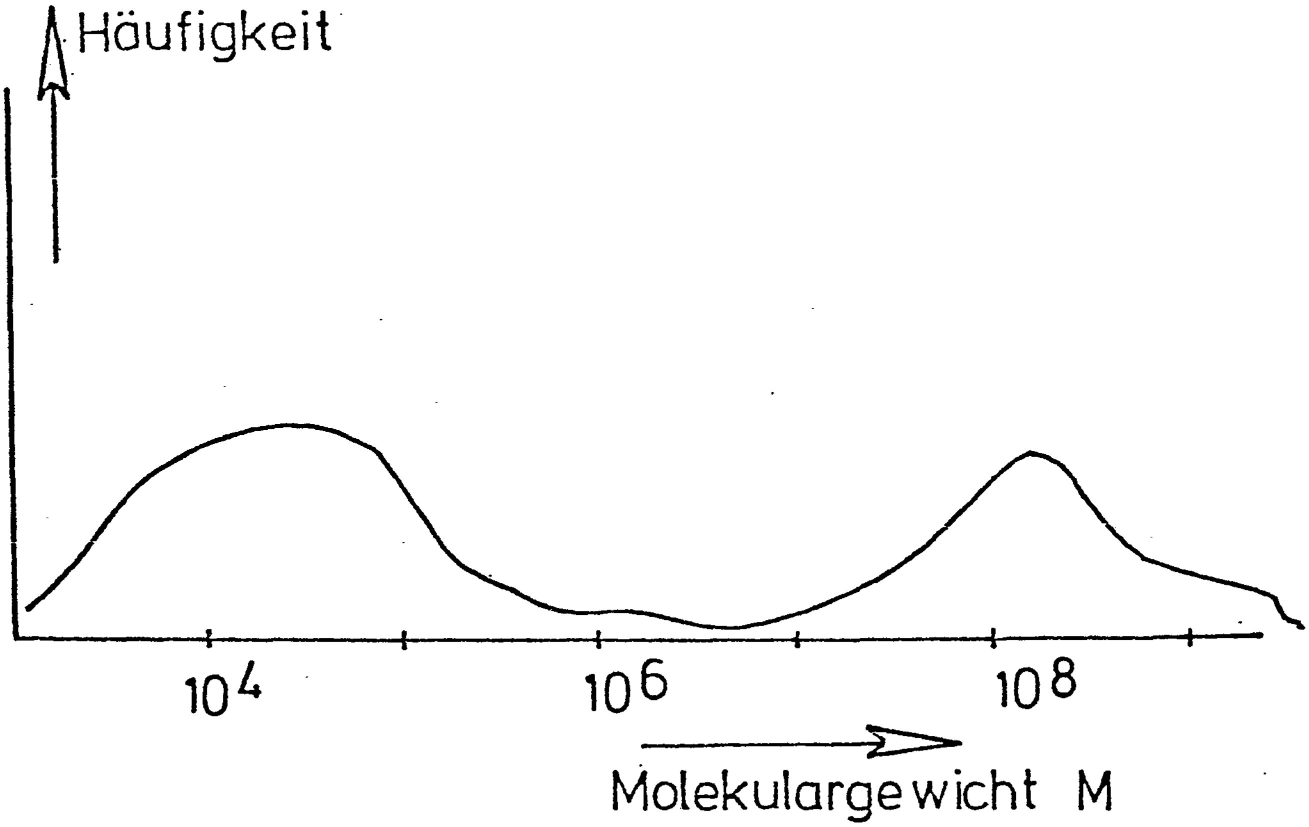
Häufigkeit
$10^4$
$10^6$
$10^8$
Molekulargewicht M

FIG. 18

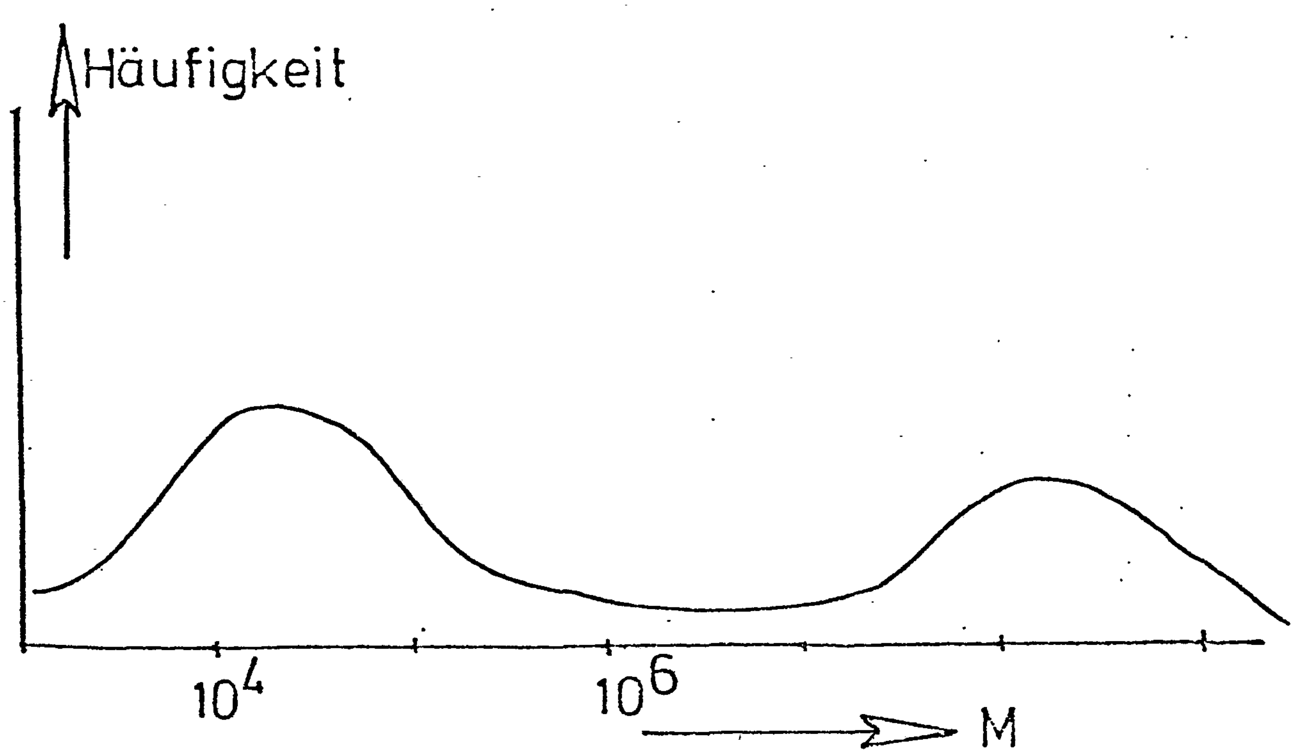
Häufigkeit
$10^4$
$10^6$
M

FIG. 19

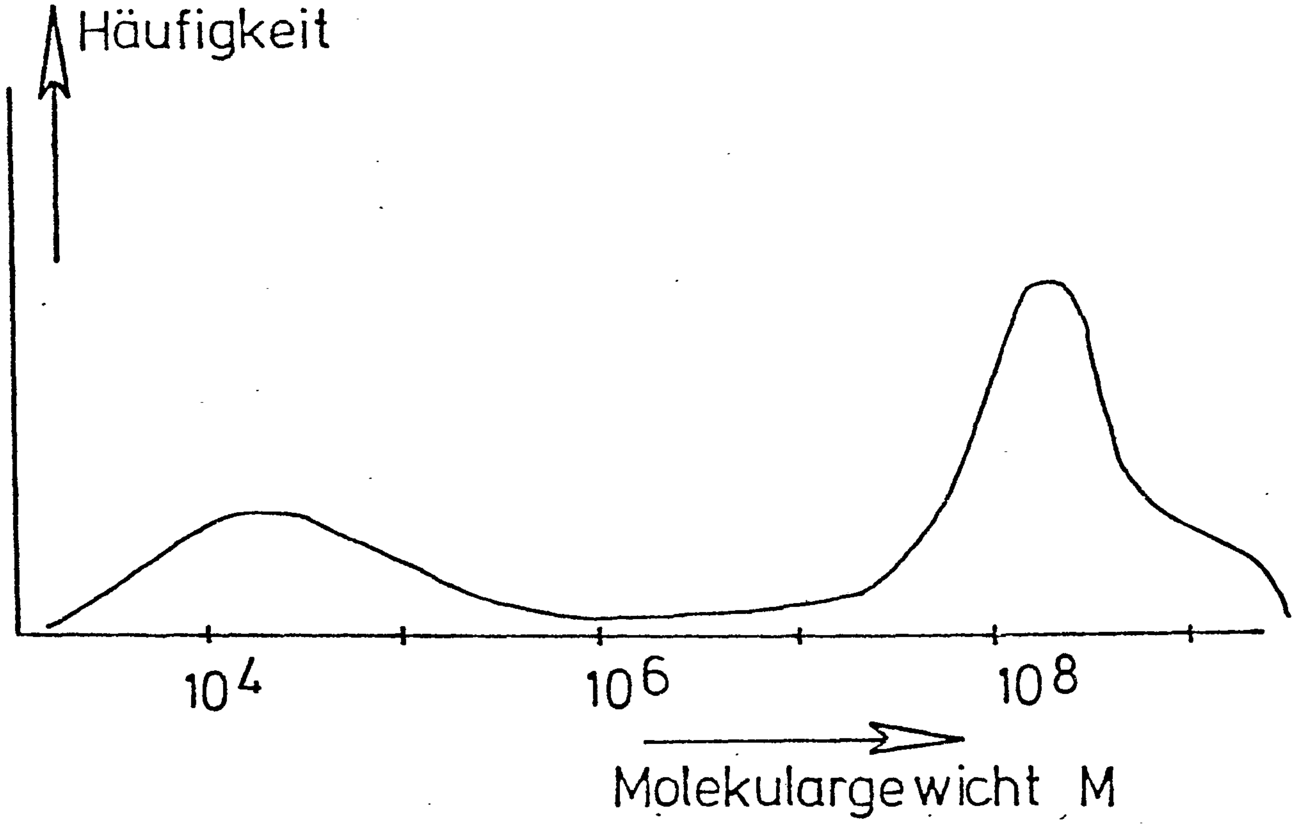
Häufigkeit
10^4
10^6
10^8
Molekulargewicht M

FIG. 20

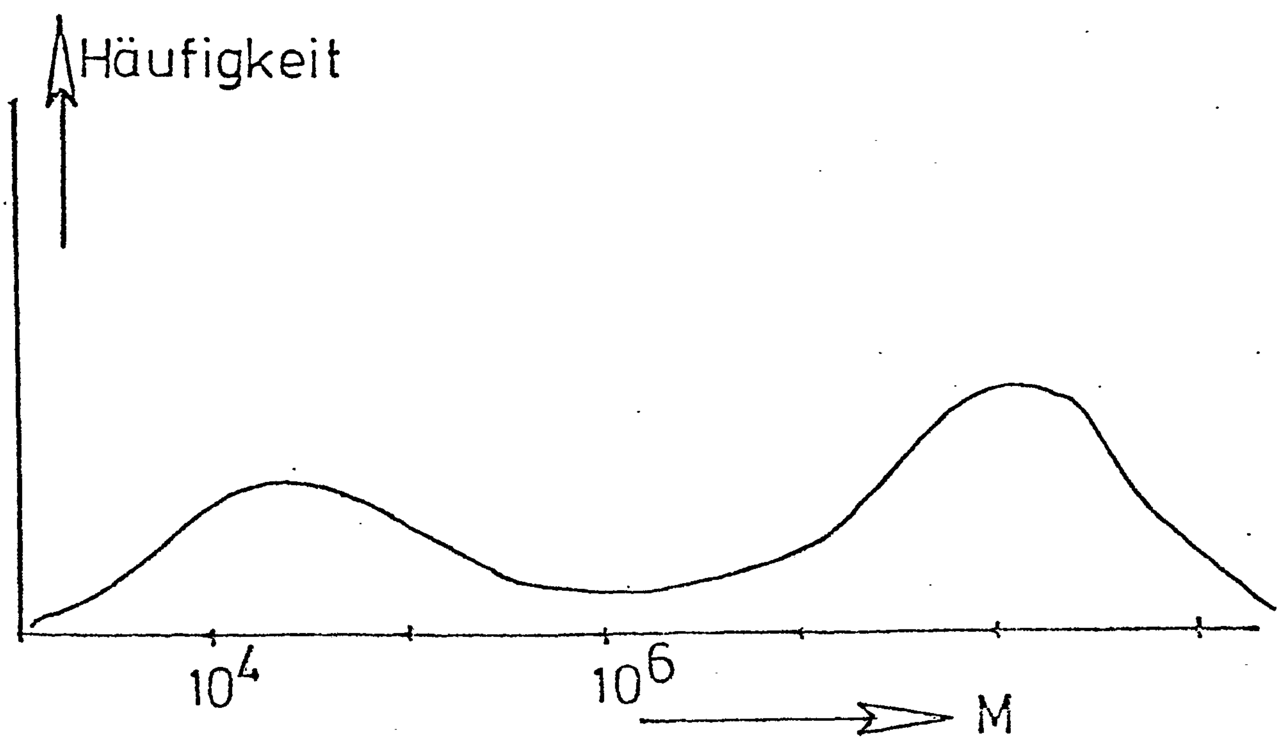
Häufigkeit
10^4
10^6
M

FIG. 21

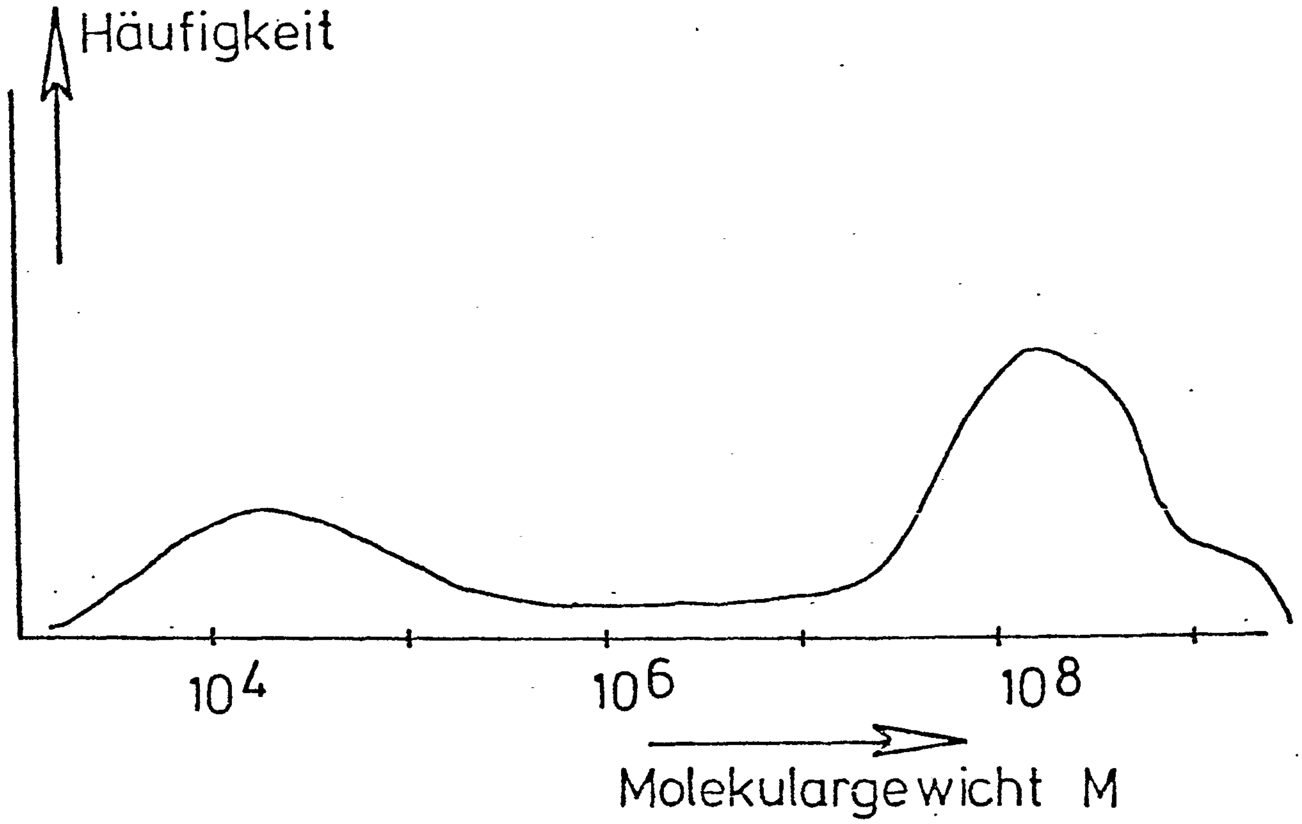
Häufigkeit
10^4
10^6
10^8
Molekulargewicht M

FIG. 22

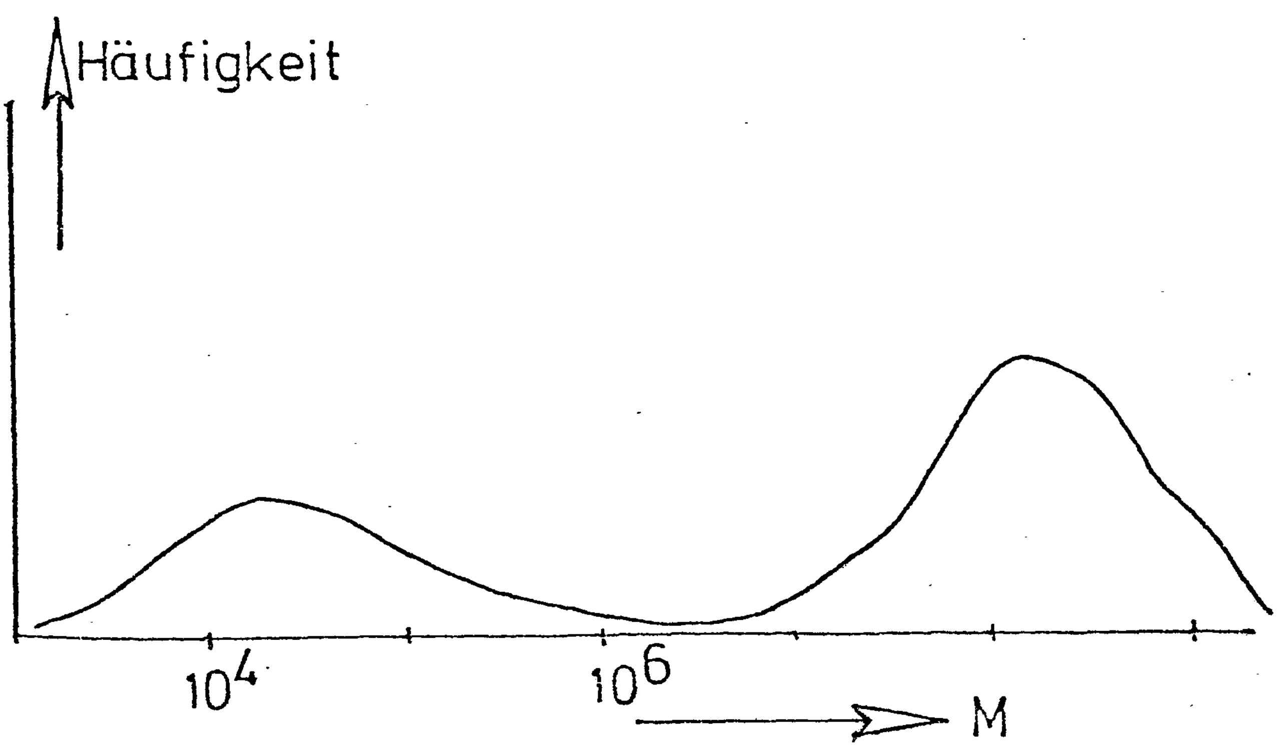
Häufigkeit
10^4
10^6
M

FIG. 23

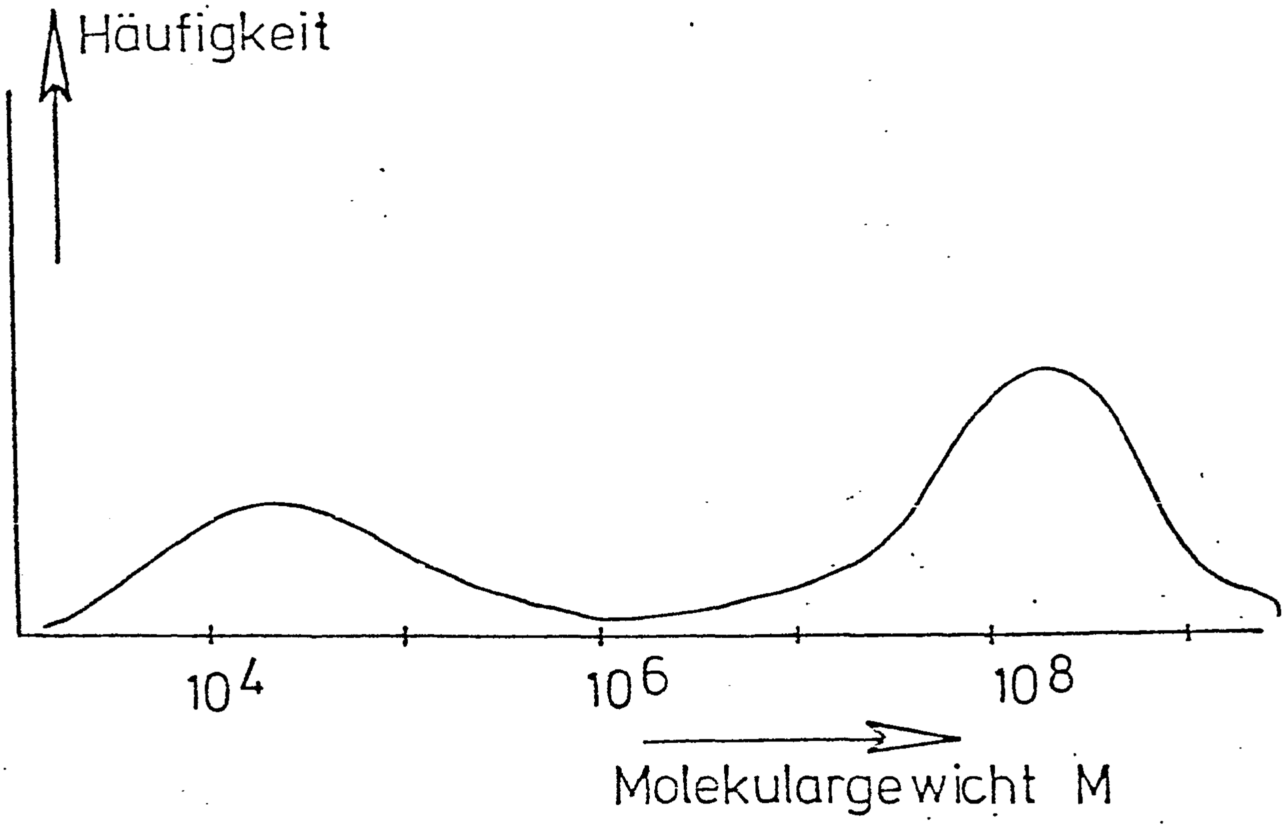
Häufigkeit
10⁴
10⁶
10⁸
Molekulargewicht M

FIG. 24

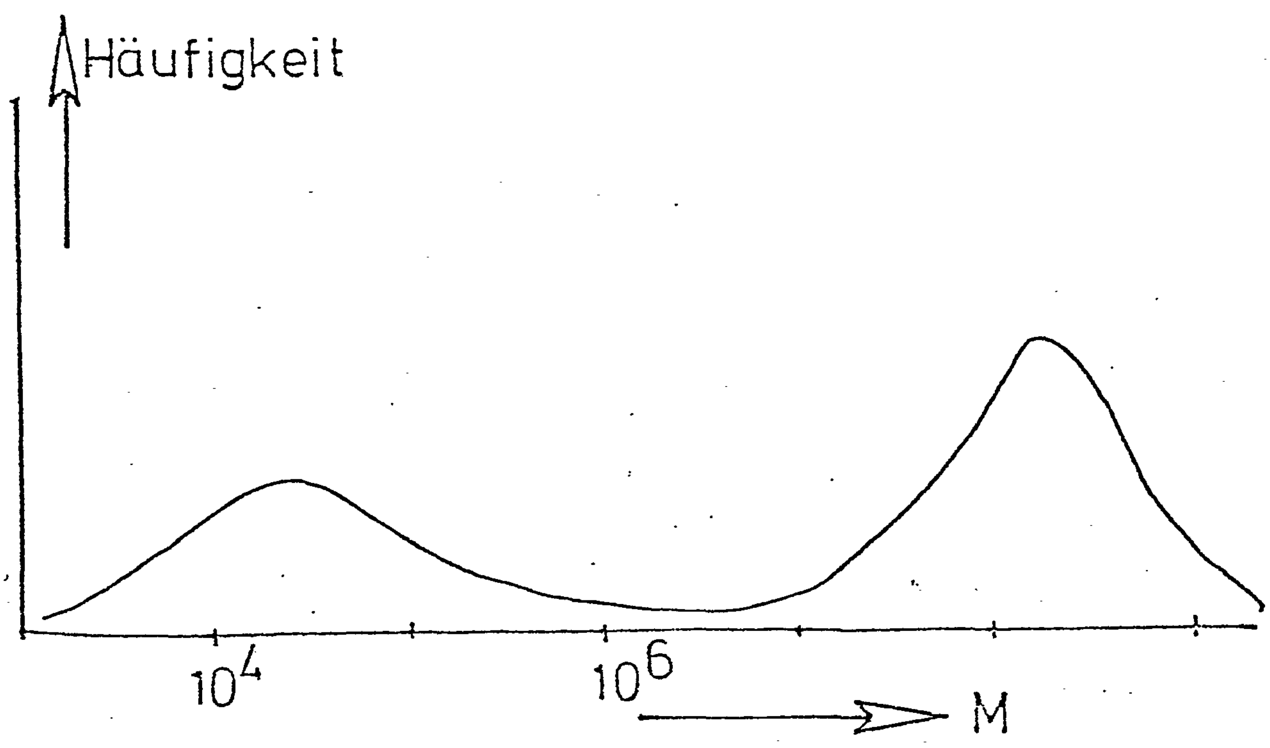
Häufigkeit
10⁴
10⁶
M